(19) Europäisches Patentamt
European Patent Office
Office européen des brevets

(11) Veröffentlichungsnummer: **0 019 924**
**B1**

(12) # EUROPÄISCHE PATENTSCHRIFT

(45) Veröffentlichungstag der Patentschrift: **16.01.85**

(51) Int. Cl.⁴: **G 11 B 7/00**, G 11 B 27/36

(21) Anmeldenummer: **80103017.2**

(22) Anmeldetag: **30.05.80**

(54) **Verfahren und Vorrichtung zum Aufzeichnen von Datensignalen auf einem Speichermedium.**

(30) Priorität: **04.06.79 US 45112**

(43) Veröffentlichungstag der Anmeldung:
**10.12.80 Patentblatt 80/25**

(45) Bekanntmachung des Hinweises auf die Patenterteilung:
**16.01.85 Patentblatt 85/3**

(84) Benannte Vertragsstaaten:
**AT BE CH DE FR GB IT LI LU NL SE**

(56) Entgegenhaltungen:
**US - A - 2 937 368**
**US - A - 3 365 706**
**US - A - 3 657 707**
**US - A - 3 761 905**
**US - A - 3 790 755**
**US - A - 4 145 758**

**IBM TECHNICAL DISCLOSURE BULLETIN, Band 13, Nr. 6, November 1970, New York, US, W. JANUS: "Skip of magnetic tape defective area", Seiten 1413-1414**
**PATENTS ABSTRACTS OF JAPAN, Band 3, Nr. 70 (E-117), Juni 1979, Seite 83 E 117**
**IEEE SPECTRUM, Band 16, Nr. 2, Februar 1979, New York, US, G.C. KENNEY et al.: "An optical disk replaces 25 MAG tapes", Seiten 33-38**

(73) Patentinhaber: **DISCOVISION ASSOCIATES, P.O. Box 6600 3300 Hyland Avenue, Costa Mesa California 92626 (US)**

(72) Erfinder: **Szerlip, Stanley R., 7937 Woodman Avenue, Panorama City California 91402 (US)**

(74) Vertreter: **Fleuchaus, Leo, Dipl.-Ing. et al, Melchiorstrasse 42, D-8000 München 71 (DE)**

**EP 0 019 924 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung und ein Verfahren zum Aufzeichnen von Datensignalen auf einem sich bewegenden Speichermedium entsprechend den Oberbegriffen der Ansprüche 1, 19 und 20.

Vorrichtungen dieser Art sind besonders nützlich und vorteilhaft zum Speichern von Daten, insbesondere digitalen Daten auf magnetischen oder optischen Speichermedien. Als Nachteil ergibt sich, dass Defektbereiche im magnetischen Material oder in der optischen Oberfläche die Aufzeichnung der Daten verhindern können. Es ist deshalb wünschenswert, Massnahmen zu schaffen, um sicherzustellen, dass die gewünschten Daten richtig aufgezeichnet sind bzw. dass die Defektbereiche vor der Aufzeichnung der Daten erkannt werden, um diese bei der Aufzeichnung übergehen zu können. Aufzeichnungssysteme, bei welchen die aufgezeichneten Daten nach der Aufzeichnung bestätigt bzw. überprüft werden, sind als Systeme mit einer Lese-Nach-Schreibkontrolle bzw. Lese-Während-Schreibkontrolle (US-A-3 657 707) bekannt. Bei einem System dieser Art werden die Daten in einer Reihe von Spuren aufgezeichnet, wobei ein intensitätsmodulierter Lichtstrahl als Schreibstrahl verwendet wird, der auf das sich mit konstanter Geschwindigkeit drehende Speichermedium fokussiert ist. Ferner wird ein Lesestrahl auf einen Bereich des Speichermediums gerichtet, die bereits beschrieben wurde, um einen reflektierten Strahl zu erzeugen, der ebenfalls entsprechend der aufgezeichneten Daten in seiner Intensität moduliert ist. Dieser reflektierte Strahl wird abgetastet und mit den ursprünglich aufgezeichneten Daten verglichen, womit die richtige Aufzeichnung nachgewiesen werden kann. Wenn ein Aufzeichnungsfehler festgestellt wird, werden die falsch aufgezeichneten Daten mit einer entsprechenden Kennung versehen und diese Daten erneut aufgezeichnet.

Ein derartiges System ist bereits durch den Aufsatz «An optical Disk Replaces 25 Mag Tapes» von George C. Kenney et al. bekannt und in IEEE Spectrum 1979 beschrieben. Obwohl ein solches System grundsätzlich dazu geeignet ist, Aufzeichnungen auf einem Speichermedium vorzusehen, welche nahezu ohne Fehler wiedergewonnen werden können, ergeben sich doch Nachteile dadurch, dass zur Verfügung stehende Aufzeichnungskapazität nicht effizient ausgenutzt wird, da wesentliche Teile der Daten regelmässig erneut aufgezeichnet werden müssen, wenn immer Fehler bei der Aufzeichnung festgestellt werden.

Es sind auch Systeme bekannt, mit welchen Defektbereiche auf einem Speichermedium vor der Aufzeichnung der Daten ermittelt werden, wobei jedoch diese Systeme immer eine Überprüfung des gesamten Speichermediums vor der Aufzeichnung der eigentlichen Daten erforderlich machen, um mit aufgezeichneten Identifizierungskennungen den Ort der Defektbereiche zu kennzeichnen. Nachdem das gesamte Speichermedium auf diese Art abgetastet und die Defektbereiche entsprechend gekennzeichnet sind, können die Daten in den defektfreien Bereichen des Speichermediums aufgezeichnet werden. Diese Systeme sind nicht voll zufriedenstellend, und zwar aus verschiedenen Gründen. Zum ersten werden zwei komplette Abtastungen des Speichermediums erforderlich, und zwar eine zum Feststellen der Defektbereiche und eine weitere zum Aufzeichnen der gewünschten Daten. Ausserdem ergibt sich bei optischen Speicherplatten, bei denen die genaue Lokalisation der einzelnen Aufzeichnungsspuren erst mit der Aufzeichnung der Daten genau festliegt, die Schwierigkeit, dass die aufeinanderfolgenden Umfangsbereiche der Speicherplatte, welche beim ersten Durchlauf zum Feststellen der Defektbereiche abgetastet werden, nicht genau den aufeinanderfolgenden Umfangsbereichen beim zweiten Durchlauf während der Aufzeichnung entsprechen. Aus diesem Grund ist es schwierig, die beiden Abtastungen miteinander zu korrelieren und genau während der Aufzeichnung den Bereich festzustellen, der bei der vorausgehenden Abtastung als Defektbereich ermittelt wurde.

Schliesslich ist für die Datenaufzeichnung auf Magnetbändern auch bekannt (IBM Technical Disclosure Bulletin, Band 13, Nr. 16, Nov. 1970, S. 1413 bis 1414 und US-A-2 937 368), den gesamten für die Aufzeichnung zur Verfügung stehenden Bereich mit einem Testsignal zu belegen und anschliessend wieder abzutasten, um bei Veränderungen des Testsignals Defektbereiche festzustellen. Vor der Datenaufzeichnung wird das Testsignal gelöscht, wobei im Defektbereich nur ein Teil des Testsignals gelöscht wird und ein auf dem Speichermedium verbleibender Teil als Flagsignal dient. Entspricht das gelesene Testsignal nicht dem geschriebenen Testsignal, so wird das Aufzeichnen von Daten so lange ausgesetzt, bis eine bestimmte Zeitlang fehlerfreie Testsignale lesbar sind. Es wird als nachteilig angesehen, dass zur Feststellung von Defektbereichen die Speichereigenschaften des Speichermediums durch Aufspielen eines Testsignals geändert werden muss. Auch die Notwendigkeit einer separaten Datenspur für die Aufzeichnung des Defekt-Flagsignals wird als nachteilig angesehen, da dies die Kapazität des Speichermediums beeinträchtigt. Schliesslich wird ein zusätzlicher Aufwand für das Löschen des Testsignals erforderlich.

Der Erfindung liegt die Aufgabe zugrunde, eine Vorrichtung und ein Verfahren zum Aufzeichnen von Daten auf einem Speichermedium zu schaffen, bei dem Defektbereiche auf dem Speichermedium rasch erkannt und gekennzeichnet werden können, wobei möglichst wenig Platz auf dem Speichermedium für die Kennung und die nachzuholende Aufzeichnung der Daten benötigt wird.

Diese Aufgabe wird ausgehend von der eingangs erwähnten Vorrichtung durch das Vorsehen der im kennzeichnenden Teil der Ansprüche 1 und 19 aufgeführten Merkmale gelöst.

Das erfindungsgemässe Verfahren zum Aufzeichnen von Datensignalen auf einem Speicher-medium wird durch die Merkmale des Anspruchs 20 gekennzeichnet.

Weitere Ausgestaltungen der Erfindung sind Gegenstand von weiteren Ansprüchen.

Die Vorrichtung und das Verfahren gemäss der Erfindung sind besonders auf die Aufzeichnung von Datensignalen auf lichtreflektierenden Speicherplatten geeignet, wobei die Signalwandlereinrichtungen die Intensität eines aus Licht bestehenden Schreibstrahles entsprechend dem Datensignal modulieren. Ein Linsenschlitten dient dazu, den modulierten Strahl über die Speicherplatte radial zu verschieben, wobei sich die Speicherplatte mit einer konstanten Winkelgeschwindigkeit dreht. Die Intensität des Schreibstrahls ist abwechselnd grösser und kleiner als ein bestimmter Schwellwert, bei welchem die lichtreflektierende Oberfläche der Speicherplatte im Auftreffpunkt des Lichtstrahles in einen nicht reflektierenden Bereich umgewandelt wird. Da sich der Linsenschlitten radial verschiebt und sich gleichzeitig die Speicherplatte mit konstanter Winkelgeschwindigkeit dreht, entstehen mit Abstand aufeinanderfolgende, mikroskopisch kleine, nicht reflektierende Bereiche, die die Dateninformation auf der Speicherplatte darstellen. Diese Bereiche verlaufen im wesentlichen entlang kreisförmiger und konzentrischer Aufzeichnungsspuren.

Der Linsenschlitten ist ferner derart ausgerüstet, dass er einen Vorschreibstrahl relativ geringer Lichtintensität auf die Speicherplatte vor dem Schreibstrahl richtet. Dieser Vorschreibstrahl tastet noch nicht mit Daten versehene Bereiche der Speicherplatte ab und wird reflektiert entsprechend den Reflexionseigenschaften der Speicherplatte im Auftreffpunkt. Der reflektierte Vorschreibstrahl wird mit Hilfe von Defektdetektoreinrichtungen erfasst, die daraus ein Defektsignal ableiten, wenn immer die Intensitätsänderung des reflektierten Strahles anzeigt, dass ein nichtreflektierender Defektbereich auf der Speicherplatte erfasst worden ist. Mit Hilfe dieses Signals wird dafür gesorgt, dass der Schreibstrahl, welcher nachfolgend die Speicherplatte abtastet, für denjenigen Teil der Speicherplatte, welcher mit dem Defektsignal gekennzeichnet ist, nicht mit dem Datensignal moduliert wird. Dadurch wird für den Defektbereich die Aufzeichnung unterbrochen.

Bei einer weiteren Ausgestaltung der Erfindung kann ein weiterer Lichtstrahl, beispielsweise ein Fokusstrahl, mit verhältnismässig geringer Intensität zur Abtastung noch nicht bespielter Teile der Speicherplatte benutzt werden, der dem Vorschreibstrahl um einen geringen Betrag versetzt nacheilt. Dieser zusätzliche Lichtstrahl wird entsprechend von der Speicherplatte reflektiert und, wenn immer die Intensität dieses reflektierten Strahles die Intensität des reflektierten Vorschreibstrahles um einen grösseren als vorgegebenen Betrag überschreitet, ergibt sich daraus, dass der Vorschreibstrahl einen nichtreflektierenden Defektbereich auf der Speicherplatte erfasst hat, worauf ein Defektsignal erzeugt wird.

Obwohl sowohl der Schreibstrahl als auch der Vorschreibstrahl auf die Speicherplatte über einen gemeinsamen Linsenschlitten gerichtet werden, können die Auftreffpunkte auf der Speicherplatte entweder auf demselben Radius oder auf verschiedenen Radien liegen. Wenn beide Strahlen die Speicherplatte mit demselben Radius abtasten, wobei der Vorschreibstrahl dem Schreibstrahl um einen bestimmten Betrag vorauseilt, kann das Datensignal von dem Modulator eine bestimmte Zeit, nachdem der Defektbereich vom Vorschreibstrahl festgestellt wurde, abgeschaltet werden. Diese bestimmte Zeit muss kleiner als der Betrag sein, um welchen der Vorschreibstrahl dem Schreibstrahl vorauseilt.

Bei einer anderen Ausführungsform der Erfindung, bei welcher ein Vorschreibstrahl und ein Schreibstrahl die Speicherplatte mit verschiedenen Radien abtasten, jedoch der Vorschreibstrahl wiederum dem Schreibstrahl um einen bestimmten Betrag vorauseilt, der in diesem Fall eine volle Umdrehung der Speicherplatte sein kann, wird der Ort des Defektbereiches vom Vorschreibstrahl abgetastet und von den Defektdetektoreinrichtungen in einem geeigneten Register gespeichert. Wenn der Schreibstrahl nunmehr nachfolgend den gleichen Ort erreicht, wird das Datensignal von dem Modulator abgeschaltet, wie bereits vorausstehend erwähnt wurde.

Die Erfindung sieht auch vor, dass ein spezielles Defekt-Flag-Signal an den Modulator für den Schreibstrahl gekoppelt wird, wenn immer festliegt, dass der Schreibstrahl einen Defektbereich auf der Speicherplatte abtastet. Damit kann beim Abspielen der Speicherplatte und der Wiedergewinnung des Datensignals dieses Defekt-Flag-Signal erfasst werden und anzeigen, dass das Datensignal temporär unterbrochen ist. Wenn der Schreibstrahl anschliessend wieder Bereiche der Speicherplatte abtastet, die unbeschädigt sind, wird das Datensignal wieder an den Modulator angekoppelt und auf der Speicherplatte aufgezeichnet.

Der Linsenschlitten kann ferner derart ausgestattet sein, dass er einen Lesestrahl mit im wesentlichen konstanter Intensität auf die Speicherplatte an einem Ort richtet, der dem Auftreffpunkt des Schreibstrahles mit einem vorgegebenen Abstand folgt. Das Licht des Lesestrahls wird von der Speicherplatte entsprechend der aufgezeichneten Information reflektiert und kann mit einem Detektor erfasst werden, um die richtige Aufzeichnung des Datensignals zu bestätigen. Bei einer speziellen Ausgestaltung der Erfindung wird der reflektierte Lesestrahl auch dazu benutzt, um das Vorhandensein von Defekt-Flag-Signalen auf der Speicherplatte festzustellen, wobei, nachdem das Defekt-Flag-Signal für eine vorgegebene Zeitdauer abgetastet wurde, festgelegt wird, dass der Schreibstrahl nicht mehr länger einen Defektbereich auf der Speicherplatte abtastet und daher das Datensignal wieder an den Modulator für den Schreibstrahl angeschaltet werden kann.

Die Vorteile und Merkmale der Erfindung ergeben sich auch aus der nachfolgenden Beschreibung eines Ausführungsbeispieles in Verbindung mit den Ansprüchen und der Zeichnung. Es zeigen:

Fig. 1 ein vereinfachtes Blockdiagramm eines Aufzeichnungsgerätes mit einer direkten Lese-Nach-Schreibkontrolle, um das Vorhandensein von nicht reflektierenden Defektbereichen auf einer lichtreflektierenden Speicherplatte festzustellen und um Datensignale nur auf denjenigen Teilen der Speicherplatte aufzuzeichnen, welche als defektfrei ermittelt wurden;

Fig. 2 ein Blockdiagramm des Datensignal-Formators des Aufzeichnungsgerätes gemäss Fig. 1;

Fig. 3 einen vergrösserten Ausschnitt aus der Speicherplatte, aus welcher die örtliche Zuordnung eines Vorschreibstrahles, eines Fokusstrahles, eines Schreibstrahles und eines Lesestrahles hervorgeht;

Fig. 4 eine schematische, nicht massstäbliche Darstellung des Spur- und Sektorformats eines in den kreisförmigen Spuren der Speicherplatte jeweils aufgezeichneten Datensignals;

Fig. 5 eine schaubildartige Darstellung der Organisation des Datensignals in jeder der acht Datenmatrizen eines jeden Spursektors;

Fig. 6 ein vereinfachtes Flussschaltbild, aus dem die einzelnen, vom Aufzeichnungsgerät gemäss Fig. 1 durchgeführten Operationsschritte hervorgehen, beim Aufzeichnen eines Datensignals auf einer defektbehafteten Speicherplatte.

In Fig. 1 ist ein Aufzeichnungsgerät mit einer direkten Lese-Nach-Schreibkontrolle dargestellt für die Aufzeichnung von Datensignalen auf einer Speicherplatte 11. Mit Hilfe des Aufzeichnungsgerätes wird ein Schreibstrahl 13 und ein Lesestrahl 15 in Form von Lichtstrahlen auf die Speicherplatte fokussiert, wobei die Intensität des Schreibstrahles durch das Datensignal derart moduliert ist, dass diese Intensität alternierend grösser und kleiner als ein vorgegebener Schwellwert ist, bei welchem eine im wesentlichen nicht reflektierende, mikroskopisch kleine Narbe auf der Oberfläche der Speicherplatte ausgebildet wird. Der Lesestrahl hat anderseits eine im wesentlichen konstante Intensität, die unterhalb dieses genannten Schwellwertes liegt.

Das Aufzeichnungsgerät ist mit einem Linsenschlitten 17 versehen, um die Auftreffpunkte des Schreibstrahls 13 und des Lesestrahls 15 auf der Speicherplatte 11 in radialer Richtung zu verschieben, während die Scheibe mit einer vorgegebenen Winkelgeschwindigkeit durch einen Motor 19 angetrieben wird. Dadurch erhält man eine Reihe von im wesentlichen kreisförmig und konzentrisch zueinander angeordneten Aufzeichnungsspuren auf der Speicherplatte. Der Radius des Auftreffpunktes des Lesestrahls auf der Speicherplatte ist derselbe wie der des Schreibstrahles, wobei dafür gesorgt wird, dass alle Teile der Speicherplatte vom Lesestrahl innerhalb einer vorgegebenen Zeit nach dem Auftreffen des Schreibstrahles abgetastet werden. Der Lesestrahl wird von der Speicherplatte entsprechend dem vorhandenen Muster aus nicht reflektierenden und vom Schreibstrahl ausgelösten Narben reflektiert, wobei dieser reflektierte Lesestrahl in bekannter Weise ausgewertet werden kann, um sicherzustellen, dass das Datensignal richtig aufgezeichnet ist.

Ferner ist vorgesehen, dass ein in seiner Intensität im wesentlichen konstanter Vorschreibstrahl 21 auf die Speicherplatte 11 fokussiert wird, um diese vor dem Auftreffen des Schreibstrahles 13 abzutasten und eventuell vorhandene, nicht reflektierende Defektbereiche zu ermitteln, welche eine Aufzeichnung der Information verhindern könnten. Die Aufzeichnung des Datensignals wird nach der Feststellung eines Defektbereiches unterbrochen, bis durch die Abtastung festgestellt wird, dass der Defektbereich nicht mehr vorhanden ist. Ausserdem wird ein Defekt-Flag-Signal unmittelbar vor dem Defektbereich eingespeichert, so dass beim Abspielen der Datensignale zu einem späteren Zeitpunkt das Wiedergabegerät aufgrund des Defekt-Flag-Signals feststellt, dass die Datenaufzeichnung vorübergehend unterbrochen ist. Auf diese Weise kann man das erneute Einschreiben von grossen Informationsblöcken vermeiden, was herkömmlicherweise üblich ist, wenn Defekte mit herkömmlichen Lese-Nach-Schreibsystemen festgestellt werden. Durch diese Massnahmen lässt sich der Wirkungsgrad der Aufzeichnung wesentlich verbessern.

Wie aus Fig. 1 entnehmbar, wird der Schreibstrahl 13 von einem Schreiblaser 23 erzeugt und mit Hilfe eines Modulators 25 in seiner Intensität moduliert, wobei dieser Modulator ein akustischer Modulator oder eine Pockelszelle sein kann. Der modulierte Strahl wird dann zu dem radial verschiebbaren Linsenschlitten 17 übertragen, in welchem er an einem Spiegel 27 reflektiert und über einen Strahlteiler 29 weiter übertragen wird. Mit Hilfe einer Objektivlinse 31 wird der Strahl auf die Speicherplatte 11 fokussiert. Wie bereits erwähnt, wird die Speicherplatte vom Motor 19 aus mit einer vorgegebenen Winkelgeschwindigkeit angetrieben, so dass durch die radiale Verschiebung des Linsenschlittens eine im wesentlichen aus kreisförmigen und konzentrisch zueinander verlaufenden Einzelspuren gebildete Aufzeichnungsspur entsteht.

Das Aufzeichnungsgerät gemäss Fig. 1 umfasst ferner einen Leselaser 33, der einen Lichtstrahl 34 erzeugt, welcher in einem Beugungsgitter 35 in drei separate Strahlen unterteilt wird, nämlich den Lesestrahl 15, den Vorschreibstrahl 21 und einen Fokusstrahl 37. Der primäre, vom Beugungsgitter erzeugte Strahl ist der Lesestrahl mit etwa 35% des Leistungsniveaus des Lichtstrahls 34. Der Lichtstrahl ersten Grades ist der Fokusstrahl mit einem Leistungsniveau von etwa 20% des nicht gebeugten Strahles, wogegen der Lichtstrahl zweiten Grades der Vorschreibstrahl ist mit einem Leistungsniveau von ebenfalls etwa 20% des nicht gebeugten Strahles. Das Beugungsgitter ist derart angeordnet, dass Fraktionen höherer Ordnung ausgeschieden werden und nur die Lichtstrahlen ersten und zweiten Grades auf der anderen Seite des Primärgrades zur Verfügung stehen.

Der Vorschreibstrahl 21, der Fokusstrahl 37 und der Lesestrahl 15 werden vom Beugungsgitter 35 aus über einen zweiten Strahlteiler 39 zum Linsenschlitten 17 übertragen, in welchem sie am Strahlteiler 29 reflektiert, mit dem Schreibstrahl 13 kombiniert und über die Objektivlinse 31 auf die Speicherplatte 11 fokussiert werden. Bei der bevorzugten Ausführungsform gemäss Fig. 1 finden drei durch Beugung bzw. Brechung gewonnene Strahlen und ein Schreibstrahl 13 Verwendung, welche aufeinander und zur Speicherplatte 11 derart ausgerichtet sind, dass sie alle auf einem gemeinsamen Radius auftreffen, wobei der Vorschreibstrahl etwa 25 µm vor dem Fokusstrahl 37 und etwa 50 µm vor dem Lesestrahl 15 positioniert sind und wobei der Schreibstrahl etwa 1 bis 4 µm vor dem Lesestrahl liegt.

Der Vorschreibstrahl 21, der Fokusstrahl 37 und der Lesestrahl 15 werden von der Speicherplatte 11 entsprechend der Reflexionseigenschaften dieser Platte in ihrem Auftreffpunkt reflektiert. Da der Vorschreibstrahl und der Fokusstrahl vor dem Schreibstrahl 13 positioniert sind und daher auf unbelegte Bereiche der Speicherplatte auftreffen, haben die reflektierten Strahlen im Idealfall eine im wesentlichen konstante Intensität. Auf der anderen Seite folgt der Lesestrahl dem Schreibstrahl, so dass dessen reflektierter Strahl eine Intensität hat, die entsprechend der aufgezeichneten Information moduliert ist. Die reflektierten Strahlen der drei erwähnten Strahlen werden über die Objektivlinse 31 aufgenommen und über den ersten Strahlteiler 29 zum zweiten Strahlteiler 39 übertragen, von wo aus sie drei verschiedenen Photodetektoren 41, 43 und 45 zugeführt werden. Die Photodetektoren 41 und 45 sind dem reflektierten Vorschreibstrahl 21 und dem reflektierten Lesestrahl 15 zugeordnet und erzeugen elektrische Signale, die der Intensität dieser reflektierten Strahlen proportional sind. Die erzeugten Signale werden in geeigneter Weise in Vorverstärkern 47 und 49 verstärkt, um ein Vorschreibsignal einerseits und ein Lese-Nach-Schreibsignal andererseits über Ausgangsleitungen 48 und 50 zur Verfügung zu stellen.

Der Photodetektor 43 für den reflektierten Fokusstrahl umfasst zwei separate Photozellen, um ein elektrisches Signalpaar zu erzeugen. Dieses Signalpaar wird einem Vorverstärker 51 zugeführt, der die beiden Signale verstärkt und summiert, um ein Summensignal abzuleiten, das repräsentativ für die Gesamtintensität des Strahles ist. Ferner werden die beiden Signale voneinander subtrahiert, um ein Fokusfehlersignal zu erzeugen, welches den Grad der Fokussierung aller Strahlen kennzeichnet. Dieses Fokusfehlersignal steht an der Ausgangsleitung 53 für ein nicht dargestelltes Fokusservosystem zur Verfügung. Ein derartiges Fokusservosystem ist durch die US-PS 4 152 586 bekannt.

Das Vorschreibsignal und das Lese-Nach-Schreibsignal von den Vorverstärkern 47 und 49 sowie das Summensignal vom Vorverstärker 51 werden über die Ausgangsleitungen 48, 50 und 59 an eine Datensignal-Formatorschaltung 61 übertragen. In dieser Schaltung werden die Signale verarbeitet, um nicht reflektierende Defektbereiche auf der Speicherplatte 11 festzustellen und zusätzlich geeignet aufgebaute Formate der digitalen Datensignale zu schaffen, welche über die Leitung 63 dem Modulator 25 zur Modulation des Schreibstrahles zugeführt werden.

Das Format des Datensignals, welches jeweils in der Aufzeichnungsspur der Speicherplatte 11 gespeichert wird, ist in Fig. 4 in einem schematisierten Diagramm dargestellt. Das Format umfasst einen Vorlaufkode, dem eine Vielzahl von kontinuierlichen Datensektoren, normalerweise etwa 24 bis 28, folgen und an welche ein Nachlaufkode anschliesst. Jeder Datensektor seinerseits umfasst eine Vielzahl von aufeinanderfolgenden Informationssegmenten, nämlich einen Adressen-Flag-Kode, einen Sektoradressen-Kode und die Daten von acht separaten Datenmatrizen, welche jeweils durch einen speziellen Separationskode voneinander getrennt sind.

Wie aus Fig. 5 hervorgeht, umfasst jede der acht Datenmatrizen an jedem Spursektor 1536 Bit-Zellen, die in 16 Reihen zu je 96 Bits angeordnet sind. Die ersten 64 Bits jeder Reihe gehören zum Datenfeld, wogegen die restlichen 32 Bits einem herkömmlichen Fehlerkorrekturkode zugeordnet sind, der die Fehler korrigiert, welche beim Abspielen der Bits von der Speicherplatte entstehen können. Die durch die 32 Bits des Fehlerkorrekturkodes gegebene Redundanz in jeder Reihe der Datenmatrix ermöglicht die Korrektur von zumindest zwei Bit-Fehlern pro Reihe. Die Daten werden zunächst in jede Matrix der Reihe nach eingegeben, jedoch werden sie der Datensignal-Formatorschaltung 61 zur Kodierung und eventuellen Aufzeichnung auf der Speicherplatte spaltenweise zugeführt. Diese Verkettung stellt sicher, dass das Auftreten von Burst-Fehlern, d.h. von Fehlern, die in einer Anzahl von aufeinanderfolgenden Bit-Zellen auf der Speicherplatte auftreten, die Fehlerkorrekturkapazität des 32-Bit-Fehlerkorrekturkodes in jeder Reihe nicht übersteigen. Wenn somit z.B. beim Abspielen von 16 aufeinanderfolgenden Bits von der Speicherplatte Fehler gemacht werden, muss jedes falsche Bit notwendigerweise in einer anderen Reihe der Matrix ausgelöst worden sein, so dass die Kapazität des Fehlerkorrekturkodes dadurch nicht überschritten wird.

Bei der bevorzugten Ausführungsform haben alle aufeinanderfolgenden Informationssegmente im Format der Spur eine relative Einschaltdauer von etwa 50%, wodurch das Verfolgen der mit Information versehenen Spuren beim Abspielen erleichtert wird. All die verschiedenen Informationssegmente werden durch eine geeignete Auswahl aus drei synchronen Rechtecksignalen mit den Frequenzen 1,8 MHz, 3,6 MHz und 7,2 MHz erzeugt.

Im speziellen umfasst, wie Fig. 4 zeigt, der Vorlaufkode eine Vielzahl von Zyklen des 1,8 MHz-Signals. Der Adressen-Flag-Kode umfasst 10 Zyklen des 1,8 MHz-Signals gefolgt von vier Zyklen des 3,6 MHz-Signals. Die Daten-Flag umfasst 8 Zyklen des 1,8 MHz-Signals gefolgt von 8 Zyklen des 3,6 MHz-Signals. Der Separationskode umfasst 4 Zyklen des 1,8 MHz-Signals. Sowohl das Sektor-Adressensegment eines jeden Sektors und jede der 8 Datenmatrizen für jeden Sektor haben ein spezielles fm-Format, in welchem eine binäre 1 durch einen kompletten Zyklus des 7,2 MHz-Signals und eine binäre 0 durch den halben Zyklus des 3,6 MHz-Signals repräsentiert wird, wobei die Phasen derart zueinander orientiert sind, dass zwischen aufeinanderfolgenden Bit-Zellen immer ein Niveausprung stattfindet.

Die Datensignal-Formatorschaltung gemäss Fig. 2 umfasst einen Defektdetektor 65, um nicht reflektierende Defektbereiche auf der Speicherplatte 11 durch Vergleich des Vorschreibsignals vom zugeordneten Vorverstärker 47 mit einem vorgegebenen festen Schwellwert festzustellen. Dieser Defektdetektor 65 umfasst herkömmliche Differenzverstärker und Komparatorschaltungen, um festzustellen, wann der feste Schwellwert das Vorschreibsignal um mehr als einen vorgegebenen Betrag übersteigt. Sobald dies der Fall ist, ergibt sich per Definition, dass der Vorschreibstrahl einen nicht reflektierenden Defektbereich bei der Abtastung erfasst hat. Das dadurch ausgelöste Defektsignal wird über die Leitung 67 zur Verfügung gestellt. Durch den Vergleich der Intensität des reflektierten Vorschreibstrahls mit dem reflektierten Fokusstrahl anstelle des Vergleichs mit einem vorgegebenen festen Schwellwert kann man erreichen, dass Änderungen in den Reflexionseigenschaften, wie sie auf der verhältnismässig grossen Fläche der Speicherplatte auftreten, so lange nicht als Defektbereiche angesprochen werden, solange diese Bereiche eine Aufzeichnung des Datensignals zulassen.

Bei der erstgenannten Ausführungsform empfängt der Defektdetektor 65 nur das Vorschreibsignal. Der Detektor umfasst herkömmliche Hochpassfilter und Schwellwertschaltungen, um rasche Änderungen der Intensität des reflektierten Vorschreibstrahles 21 zu erfassen. Derartige rasche Änderungen treten in der Regel immer dann auf, wenn der Strahl die vordere Kante oder die rückseitige Kante eines nicht reflektierenden Defektbereiches auf der Speicherplatte 11 abtastet. In einer der Ausführungsform gemäss Fig. 2 entsprechenden Weise liefert der Defektdetektor ein korrespondierendes Defektsignal über die Leitung 67.

Die Datensignal-Formatorschaltung 61 umfasst einen Kodierer und Flag-Generator 69, um das digitale Datensignal zu erzeugen, das über die Leitung 63 dem Modulator 25 zugeführt wird. Ferner ist eine Format-Folgesteuerung 71 für die richtige Betriebssteuerung des Kodierers 69 und eine Detektorschaltung 73 für den Vorlaufkode sowie eine Detektorschaltung 75 für den Defekt-Flag-Kode vorhanden. Der Kodierer enthält einen Oszillator, der die 1,8 MHz, die 3,6 MHz und die 7,2 MHz-Rechteckschwingung erzeugt. Im Normalbetrieb werden die speziellen Frequenzen oder ihre Umkehrungen als Datensignale durch eine Anzahl von Kontrollsignalen ausgewählt, welche von der Folgesteuerung geliefert werden. Diese Kontrollsignale umfassen ein Daten-Enable-Signal, ein 1,8 MHz-Enable-Signal und ein 3,6 MHz-Enable-Signal. Diese Signale werden über die Leitungen 77, 79 und 81 zur Verfügung gestellt. Die Format-Folgesteuerung 71 umfasst einen Mikroprozessor, mit welchem die richtige Folge der Steuersignale für die Datensignalfolge gemäss Fig. 4 erzeugt wird.

Am Beginn jeder Spur wird festgestellt, dass der Vorlaufkode aufgezeichnet ist, so dass das 1,8 MHz-Enable-Signal am Ausgang der Format-Folgesteuerung 71 über die Leitung 79 zur Verfügung steht. Der Kodierer und Flag-Generator 69 spricht auf dieses Signal an und liefert am Ausgang als digitales Datensignal das 1,8 MHz-Rechtecksignal über die Leitung 63. Dieses 1,8 MHz-Signal wird auf der Speicherplatte 11 gespeichert. Das gespeicherte 1,8 MHz-Signal wird von der Detektorschaltung 73 für den Vorlaufkode festgestellt, welche kontinuierlich das Lese-Nach-Schreibsignal vom Vorverstärker 49 über die Ausgangsleitung 50 überwacht. Sobald der Kode für eine vorgegebene Anzahl von Zyklen festgestellt wurde, wobei 8 Zyklen bevorzugt werden, wird ein Signal über die Leitung 85 der Format-Folgesteuerung 71 zugeführt und entsprechend geeignete Enable-Signale für den nächsten Informationssektor, d.h. ein Adressen-Flag-Kode abgegeben. Speziell für den Adressen-Flag-Kode liefert die Format-Folgesteuerung 71 anfänglich ein 1,8 MHz-Enable-Signal über die Leitung 79 für 10 Zyklen und dann ein 3,6 MHz-Enable-Signal über die Leitung 81 für 4 Zyklen.

In abgewandelter Form liefert die Format-Folgesteuerung 71, wenn entweder ein Sektor-Adressen-Kode oder Daten von einer der Datenmatrizen aufzuzeichnen sind, ein Daten-Enable-Signal über die Leitung 77. Der Kodierer und Flag-Generator 69 liefert als Antwort darauf ein Taktsignal über die Leitung 87, um ein NRZ-Datensignal von einem nicht dargestellten Adressen- und Datenspeicherregister für die Übertragung über die Leitung 89 zurück zum Generator auszulösen. Der Kodierer und Flag-Generator 69 wandelt dieses NRZ-Signal in herkömmlicher Weise in fm-Format um, um die richtigen Datenausgangssignale zu erzeugen. In dem fm-Format wird die binäre 1 durch einen kompletten Zyklus des 7,2 MHz-Signals und die binäre 0 durch einen halben Zyklus des 3,6 MHz-Signals repräsentiert, wobei die Phasenzuordnung derart ist, dass immer ein Niveauübergang zwischen zwei aufeinanderfolgenden Bit-Zellen stattfindet.

Zur Beschreibung des Datensignalformats, wenn nicht reflektierende Defektbereiche auf der Speicherplatte 11 durch den Defektdetektor 65 festgestellt werden, wird auf Fig. 6 und das gezeigte Fluss-Diagramm Bezug genommen. Dieses Flussdiagramm zeigt in vereinfachter Form die aufeinanderfolgenden Schritte, welche von der Datensignal-Formatschaltung 61 ausgeführt werden, um die Information für die Aufzeichnung auf der Speicherplatte 11 zu formatieren. Wenn ein Defekt in der Speicherplatte festgestellt wird, hängt die danach ablaufende Prozedur von dem speziellen Sektorinformationssegment, das gerade aufgezeichnet wird, ab.

Gemäss diesem Flussdiagramm wird mit dem Schritt 91 ermittelt, welches Sektorsegment als nächstes auf der Speicherplatte beschrieben werden soll. Wenn entweder ein Vorlaufkode, ein Matrix-Separationskode oder ein Nachlaufkode aufzuzeichnen ist, wird der gesamte Kode auf der Speicherplatte mit dem Schritt 93 eingespeichert. Ein Ausgangssignal vom Defektdetektor 65 wird nicht festgestellt. Mit einer Schleife zurück zum ersten Schritt 91 wird das nächste Sektorsegment für die Aufzeichnung bestimmt. Wenn ein Aufzeichnungsfehler für diese Informationssegmente gemacht wurde, da ein nicht reflektierender Defektbereich auf der Scheibe vorhanden ist, wird ein Playback für die Rückgewinnung der Information nicht nachteilig beeinflusst.

Wenn im ersten Schritt 91 festgestellt wird, dass ein Adressen-Flag oder ein Daten-Flag auf der Speicherplatte 11 aufzuzeichnen ist, wird die gesamte Flag mit dem Schritt 95 aufgezeichnet und danach im Schritt 97 festgestellt, ob vom Defektdetektor 65 ein Defektbereich während der Aufzeichnung der Flag festgestellt wurde oder nicht. Wenn kein Defektbereich während dieser Zeit festgestellt wurde, wird zum Anfangsschritt 91 zurückgegangen und festgestellt, welches das nächste zu bespielende Sektorsegment ist. Wenn andererseits im Schritt 97 ein Defektbereich während des Aufzeichnens der Adressen-Flag- oder der Daten-Flag festgestellt wurde, erfolgt mit dem Schritt 99 eine erneute Aufzeichnung der gesamten Flag. Anschliessend wird zum Schritt 97 zurückgegangen, um festzustellen, ob ein Defektbereich während des erneuten Einschreibens der Flag festgestellt wurde oder nicht. Diese Operation wird so lange aufrechterhalten, bis man feststellt, dass kein Defektbereich während des Aufzeichnens der Flag vorhanden war.

Wenn jedoch mit dem Schritt 91 bestimmt wird, dass ein Sektoradressenfeld oder ein Datenfeld aufzuzeichnen ist, wird das nächstfolgende Bit des Segmentes mit dem Schritt 101 aufgezeichnet und danach mit dem Schritt 103 bestimmt, ob das gerade aufgezeichnete Bit das letzte Bit des Feldes ist oder nicht. Wenn dieses Bit das letzte Bit des Feldes war, wird zum Ausgangsschritt 91 zurückgegangen und bestimmt, in welchem Sektorsegment nunmehr die weitere Aufzeichnung erfolgt. Wenn andererseits festgestellt wird, dass beim Schritt 103 das zuletzt aufgezeichnete Bit nicht das letzte Bit im Feld ist, dann wird ermittelt, mit dem Schritt 105, ob ein Defektbereich während der Aufzeichnung dieses Bits festgestellt wurde. Wenn kein Defektbereich während dieser Zeit aufgetreten ist, wird zurück zum Schritt 101 gegangen, und das nächstfolgende Bit des Feldes aufgezeichnet. Wenn dagegen ein Defektbereich festgestellt wurde, löst dies die Aufzeichnung eines speziellen Defekt-Flag-Kode auf der Speicherplatte so lange aus, bis im Schritt 107 festgestellt wird, dass eine bestimmte Anzahl von fehlerfreien Zyklen durch den Schreibstrahl 13 aufgezeichnet und vom Lesestrahl 15 abgetastet wurden. Sobald sich dies ereignet, wird zum Schritt 101 zurückgegangen und das nächste Bit des Feldes auf der Speicherplatte 11 aufgezeichnet. Das Bit, das aufgezeichnet wurde, wenn ein Defektbereich erstmals vom Defektdetektor 65 festgestellt wird, muss nicht erneut aufgezeichnet werden, da der Schreibstrahl 13 dem Vorschreibstrahl 21 mit einem genügend langen Abstand nacheilt, um sicherzustellen, dass eine Aufzeichnung auf einem defektfreien Bereich der Speicherplatte erfolgt.

Bei der bevorzugten Ausführungsform der Erfindung umfasst der spezielle Defekt-Flag-Kode zwei anfängliche Zyklen des 1,8 MHz-Rechtecksignals, welchem eine Anzahl von Zyklen des 3,6 MHz-Rechtecksignals folgen. Das 3,6 MHz-Signal wird weiter aufgezeichnet auf der Speicherplatte, bis durch die Abtastung des reflektierten Lesestrahls 15 festgestellt wird, dass 16 aufeinanderfolgende Niveausprünge aufgezeichnet und festgestellt wurden. Dies deutet an, dass der nicht reflektierende Defektbereich vom Schreibstrahl 13 nicht mehr erfasst wird. Es ist hervorzuheben, dass sich diese Sequenzen sehr leicht von den anderen Informationssegmenten des aufgezeichneten Datensignals auf der Speicherplatte unterscheiden und daher als Flag benutzt werden können, um die zeitweilige Unterbrechung des Datensignals anzudeuten.

Bevor mit der Aufzeichnung weiterer Datensignale auf der Speicherplatte weitergefahren werden soll, muss festgestellt werden, ob ein Adressenfeld oder eine Datenmatrix aufgezeichnet wurde. Wenn ein Adressenfeld zu dem Zeitpunkt gespeichert wurde, an dem ein Defektbereich erstmals festgestellt wird, wird der Kodierer und Flag-Generator 69 derart gesteuert, dass er ausgangsseitig für die Aufzeichnung vier komplette Zyklen des 1,8 MHz-Signals gefolgt von der Wiederaufnahme der Adressenfeldinformation liefert. Wenn andererseits die Datenmatrix aufgezeichnet wurde, wird der Generator derart gesteuert, dass er ausgangsseitig vier Zyklen des 1,8 MHz-Signals gefolgt von 8 Zyklen des 3,6 MHz-Signals abgibt und anschliessend die Wiederaufnahme der Datenmatrixinformation bewirkt. Dieses angefügte Kodesegment bewirkt eine zusätzliche Sicherheit, dass die Information bei der Wiedergabe richtig von der Speicherplatte zurückgewonnen werden kann.

Wenn unter Bezugnahme auf Fig. 2 durch die Format-Folgesteuerung 71 bestimmt wird, das ein Defekt-Flag-Kode auf der Speicherplatte 11 aufgezeichnet wird, bedingt dies die Abgabe eines Defekt-Flag-Enablesignals über die Leitung 109 an den Kodierer und Flag-Generator 69, der daraufhin die genannten Kodes für die Übertragung über die Leitung 63 zum Modulator 25 erzeugt. Die Detektorschaltung 75 überwacht kontinuierlich das Lese-Nach-Schreibsignal auf der Ausgangsleitung 50 des Vorverstärkers 49 und liefert ein Steuersignal über die Leitung 111 zur Format-Folgesteuerung 71, wenn diese acht aufeinanderfolgende Zyklen des 3,6 MHz-Anteils des Defekt-Flag-Kodes richtig feststellt. Daraufhin endet das Defekt-Flag-Enablesignal und der Flag-Generator 69 wird durch den beschriebenen Kurz-Kode veranlasst, den Defekt-Flag-Kode zu vervollständigen und die Aufzeichnung des Datensignals aufzunehmen.

Da der Vorschreibstrahl 21 die Speicherplatte 11 etwa 45 bis 50 µm vor dem Schreibstrahl 13 abtastet und da das Schreiben des Defekt-Flag-Kodes innerhalb der Zeit von einem Bit von dem Zeitpunkt an ausgelöst wird, zu welchem der Vorschreibstrahl einen nicht reflektierenden Defektbereich erfasst hat, ergibt sich, dass in der Regel eine Anzahl von Zyklen des Defekt-Flag-Kodes auf der Speicherplatte aufgezeichnet werden, bevor der Schreibstrahl erstmals den Defektbereich erreicht. Daraus ergibt sich, dass selbst, wenn der Defektbereich die komplette Aufzeichnung des Defekt-Flag-Kodes verhindert, die vorausgehenden Zyklen des Kodes normalerweise beim Abspielen der Information von der Speicherplatte erfasst werden und damit die abspielende Maschine erkennt, dass das Datensignal temporär unterbrochen ist.

Es wird als besonders vorteilhaft angesehen, dass, wenn der festgestellte Defektbereich auf der Speicherplatte 11 verhältnismässig lang ist, auch der Defekt-Flag-Kode eine entsprechende Länge hat. Die Aufzeichnung des Datensignals wird nur nach der richtigen Aufzeichnung des Defekt-Flag-Kodes auf der Speicherplatte weitergeführt und für die vorausbeschriebene Zeitdauer wiedergewonnen. Eine derartige richtige Aufzeichnung kann normalerweise nur in einem nicht beeinträchtigten Teil der Speicherplatte erfolgen.

Die Datensignal-Formatorschaltung 61 umfasst ferner eine Detektorschaltung 113 für den Lese-Nach-Schreibfehler, um das Lese-Nach-Schreibsignal auf der Ausgangsleitung 50 vom Vorverstärker 49 zu überwachen. Die Schaltung vergleicht das Signal, welches für die tatsächlich auf der Speicherplatte 11 gespeicherte Information charakteristisch ist, mit dem Datensignal auf der Leitung 63, von dem angenommen wird, dass es aufgezeichnet wurde. Dieser Vergleich liefert ein Fehlersignal immer dann, wenn die beiden Signale nicht miteinander korrespondieren.

Dieses Fehlersignal wird über die Leitung 115 von der Detektorschaltung 113 zur Format-Folgesteuerung 71 und zu dem nicht dargestellten Adressen- und Datenspeicherregister übertragen. Wenn der Fehler während entweder der Aufzeichnung eines Vorlaufkodes, einer Adressen-Flag, einer Sektoradresse, einer Daten-Flag, eines Separationskodes oder eines Nachlaufkodes festgestellt wird, bewirkt die Format-Folgesteuerung die Aufzeichnung des gesamten Kodes. Wenn andererseits der Fehler festgestellt wird während der Aufzeichnung der Bits von einer Matrix, wird die Matrixspalte, welche gerade aufgezeichnet wird, zunächst vollendet und danach ein Daten-Flag-Kode aufgezeichnet sowie die Aufzeichnung der Matrixdaten weitergeführt, wobei die beiden letzten Spalten der Daten, die zuletzt aufgezeichnet wurden, noch einmal neu aufgezeichnet werden. Diese spezielle wiederholte Aufzeichnungsfolge wird deshalb vorgenommen, da es manchmal schwierig ist, die exakte Bit-Zelle festzustellen, welche noch aufgezeichnet wurde, als man den Lese-Nach-Schreibfehler erstmals feststellte.

Bei einer abgewandelten Ausführungsform der Erfindung, welche nicht dargestellt ist, trifft der Vorschreibstrahl und der Schreibstrahl jeweils mit einem anderen Radius auf die Speicherplatte auf, d.h. mit dem Abstand von einer Spur. Dies kann man leicht durch eine entsprechende Ausrichtung des Beugungsgitters erreichen. Bei dieser Ausführungsform ist ein Register für die Speicherung des Orts auf dem Umfang von jedem Defektbereich vorgesehen, der vom Vorschreibstrahl erfasst wird. Ferner sind Einrichtungen vorhanden, um die Aufzeichnung des Datensignals zu unterbrechen und an dessen Stelle ein spezielles Defekt-Flag-Signal zu speichern, wenn immer festliegt, dass sich der Schreibstrahl einem zuvor festgestellten Defektbereich nähert.

Eine weitere nicht dargestellte Ausführungsform der Erfindung sieht vor, dass der Vorschreibstrahl und der Schreibstrahl mit dem gleichen Radius auf die Speicherplatte auftreffen, wobei jedoch die für die Aufzeichnung vorgesehene Spur in zwei aufeinanderfolgenden Umläufen der Scheibe abgetastet wird. Während des ersten Umlaufes tastet der Vorschreibstrahl die Scheibe ab, um das Vorhandensein und den Ort von Defektbereichen in der Spur festzustellen, und um den Ort des Defektbereiches zu speichern. Bei der zweiten Umdrehung wird das Datensignal aufgezeichnet, wobei, wie bereits erläutert, Unterbrechungen vorgesehen sind und ein spezieller Defekt-Flag-Kode aufgezeichnet wird.

Bei dieser Ausführungsform dient der Vorschreibstrahl vorzugsweise auch als Lesestrahl, der die Speicherplatte unmittelbar hinter dem Schreibstrahl während der zweiten Umdrehung, bei welcher das Datensignal gespeichert wird, abtastet. Obwohl diese Ausgestaltung die doppelte Zeit für die Aufzeichnung einer bestimmten Anzahl von Spuren erfordert, da nämlich jede Spur bei zwei Umdrehungen der Speicherplatte abgetastet wird, hat diese Ausführungsform den Vorteil, dass sie ein Beugungsgitter unnötig macht, welches für die Erzeugung einer Anzahl von Lichtstrahlen geringer Intensität benötigt wird und entsprechend eine Anzahl von separaten Photodetektoren und Vorverstärkern erfordert.

Mit Hilfe der Erfindung lassen sich somit Datensignale auf einem Speichermedium anbringen, wobei Defektbereiche im Speichermedium, die eine korrekte Aufzeichnung der Datensignale unmöglich machen, abgetastet und festgestellt werden, unmittelbar bevor die Aufzeichnung erfolgen würde. Wenn ein solcher Defektbereich ermittelt wird, wird die Aufzeichnung des Datensignals temporär unterbrochen und ein spezieller Defekt-Flag-Kode an dessen Stelle aufgezeichnet, wobei dies entweder vor dem Defektbereich oder auch über den Defektbereich auf dem Medium vorgenommen werden kann. Damit erreicht man, dass ein erneutes Schreiben eines wesentlichen Teils der Datensignale vermieden werden kann.

**Patentansprüche**

1. Vorrichtung zum Aufzeichnen von Datensignalen auf einem sich bewegenden Speichermedium, bestehend aus

– Signalwandlereinrichtungen, welche das Speichermedium (11) abtasten und entlang einer Aufzeichnungsspur Datensignale auf demselben aufzeichnen,

– Defektdetektoreinrichtungen, welche das Speichermedium vor den Signalwandlereinrichtungen abtasten, die Aufzeichnung der Datensignale verhindernde Defektbereiche feststellen und demzufolge entsprechende Defektsignale abgeben sowie

– Steuereinrichtungen, welche in Abhängigkeit des Auftretens von Defektsignalen die Abgabe der Datensignale an die Signalwandlereinrichtungen unterbrechen und anstelle der Aufzeichnung der Datensignale auf dem Speichermedium die Aufzeichnung eines speziellen Defektsignals auf dem Speichermedium bewirken, dadurch gekennzeichnet,

– dass vor den Signalwandlereinrichtungen (17, 23, 25, 61, 89) die Defektdetektoreinrichtungen (21, 48, 65) das Speichermedium (11) ohne Änderung seiner Speichereigenschaften abtasten und

– dass die Steuereinrichtungen (39 bis 63) beim Auftreten eines Defektsignals ein Defekt-Flagsignal anstelle des Datensignals an die Signalwandlereinrichtung (17, 23, 25, 61, 89) abgeben, welche demzufolge entsprechend dem Defektsignal ein Defekt-Flagsignal entlang der Aufzeichnungsspur aufzeichnen und die jeweiligen Defektbereiche auf diese Weise markieren.

2. Vorrichtung nach Anspruch 1, dadurch gekennzeichnet, dass am Ende eines jeweiligen Defektbereiches die Defektdetektoreinrichtungen (65) die Abgabe eines Defektsignals unterbrechen und dass die Steuereinrichtungen zum Zeitpunkt des Verschwindens des Defektsignals das Datensignal erneut an die Signalwandlereinrichtung abgeben.

3. Vorrichtung nach Anspruch 1 oder 2, dadurch gekennzeichnet, dass die Defektdetektoreinrichtungen (65) zusätzlich Abtastelemente (15, 45, 49) aufweisen, welche das Speichermedium örtlich um einen bestimmten Betrag hinter der Signalwandlereinrichtung abtasten und auf diese Weise feststellen, zu welchem Zeitpunkt vorhandene Defektbereiche des Speichermediums aus dem Abtastbereich der Signalwandlereinrichtungen gelangen.

4. Vorrichtung nach Anspruch 1 oder 2, dadurch gekennzeichnet, dass die Defektdetektoreinrichtungen zusätzlich Abtastelemente (15, 45, 49) aufweisen, welche das Speichermedium örtlich um einen bestimmten Betrag hinter den Signalwandlereinrichtungen abtasten, das Vorhandensein eines Defekt-Flagsignals auf dem Speichermedium feststellen und die Abgabe eines Defektsignals beenden, sobald das Defekt-Flagsignal für eine bestimmte Zeitdauer festgestellt worden ist.

5. Vorrichtung nach einem der vorhergehenden Ansprüche, dadurch gekennzeichnet,

– dass das Speichermedium eine lichtreflektierende Speicherplatte (11) ist,

– dass die Signalwandlereinrichtungen eine Anordnung (27, 29, 31) aufweisen, mit welcher ein mit dem aufzuzeichnenden Datensignal modulierter Schreibstrahl (13) hoher Intensität in Richtung der Speicherplatte (11) führbar ist, demzufolge auf der rotierenden Speicherplatte eine Folge von im Abstand angeordneter nicht reflektierender Bereiche herstellbar ist und

– dass die Defektdetektoreinrichtungen eine Anordnung aufweisen, mit welcher ein Vorschreibstrahl (21) relativ geringer Intensität in Richtung der Speicherplatte (11) derart führbar ist, dass ein reflektierter Lichtstrahl mit den Änderungen der Reflexionseigenschaften der Speicherplatte entsprechenden Intensitätsänderungen gebildet ist, welcher zur Erzeugung eines Defektsignals herangezogen ist, sobald die Intensität des reflektierten Lichtstrahls unterhalb eines vorgegebenen Schwellwertes liegt.

6. Vorrichtung nach Anspruch 5, dadurch gekennzeichnet, dass dieselbe aus den folgenden Elementen besteht:

a) einem Modulator (25), welcher entsprechend dem aufzuzeichnenden Datensignal die Intensität des Schreibstrahls (13) moduliert,

b) ein Linsenschlitten (17), welcher sowohl den Vorschreibstrahl (21) wie auch den intensitätsmodulierten Schreibstrahl (13) in Richtung der Speicherplatte (11) lenkt, wobei der Schreibstrahl eine Spitzenintensität aufweist, mit welcher die Reflexionseigenschaften der Speicherplatte an der Auftreffstelle veränderbar sind, während der Vorschreibstrahl eine derartig geringe Intensität besitzt, dass im Auftreffpunkt keine Veränderungen der Reflexionseigenschaften der Speicherplatte auftreten,

c) eine Antriebseinrichtung, mit welcher die Speicherplatte (11) in bezug auf den Vorschreibstrahl (21) und den Schreibstrahl (13) in Drehung versetzbar ist, demzufolge beide Strahlen entlang der Oberfläche der Speicherplatte entlanggeführt sind und eine Aufzeichnung des Datensignals erfolgt, wobei der Linsenschlitten (17) den Vorschreibstrahl (21) und den Schreibstrahl (13) derart relativ zueinander positioniert, dass der Vorschreibstrahl (37) um einen bestimmten Betrag vor dem Schreibstrahl (13) auf der Speicherplatte auftrifft und wobei die Defektdetektoreinrichtungen durch Überwachung der Intensitätsveränderungen des reflektierten Vorschreibstrahls (21) bei Abtastung eines nicht reflektierten Defektbereiches der Speicherplatte ein entsprechendes Defektsignal abgeben.

7. Vorrichtung nach Anspruch 6, dadurch gekennzeichnet, dass die Steuereinrichtungen beim Auftreten eines Defektsignals ein spezielles Defekt-Flagsignal an den Modulator (25) abgeben, demzufolge auf der Speicherplatte (11) am Ort jedes Defektbereiches ein Defekt-Flagsignal zur Aufzeichnung gelangt.

8. Vorrichtung nach Anspruch 6 oder 7, dadurch gekennzeichnet, dass die Steuereinrichtungen nach einem vorgegebenen Zeitintervall im Anschluss an die Feststellung eines Defektbereiches auf der Speicherplatte das Datensignal von dem Modulator (25) abschalten.

9. Vorrichtung nach einem der Ansprüche 6 bis 8, dadurch gekennzeichnet, dass mit Hilfe des Linsenschlittens (17) in einem vorgegebenen Abstand nach dem Schreibstrahl (13) zusätzlich ein die Reflexionseigenschaften der Speicherplatte nicht beeinflussender Lesestrahl (15) auf dieselbe gerichtet ist, demzufolge durch Reflexion ein reflektierter Lesestrahl erzeugt ist, dessen Intensität entsprechend dem aufgezeichneten Datensignal moduliert ist, und dass die Defektdetektoreinrichtungen derart ausgebildet sind, dass sie anhand der Modulation der Intensität des reflektierten Lesestrahls das Vorhandensein eines Defekt-Flagsignals feststellen und die Abgabe eines Defektsignals beenden, sobald das festgestellte Defekt-Flagsignal während eines vorgegebenen Zeitintervalls aufgetreten ist.

10. Vorrichtung nach einem der Ansprüche 6 bis 9, dadurch gekennzeichnet, dass der Vorschreibstrahl (21) und der Lesestrahl (15) mit Hilfe eines Beugungsgitters (35) von ein und derselben Lichtquelle abgeleitet sind.

11. Vorrichtung nach einem der vorangegangenen Ansprüche, dadurch gekennzeichnet, dass der Linsenschlitten (17) derart bewegbar ist, dass die Auftreffpunkte des Vorschreibstrahls (21) und des Schreibstrahls (13) sich in radialer Richtung auf der Speicherplatte (11) verschieben, demzufolge auf derselben eine Vielzahl von im wesentlichen kreisförmig und konzentrischen Aufzeichnungsspuren gebildet sind, und dass der Linsenschlitten (17) derart ausgebildet ist, dass der Vorschreibstrahl (21) und der Schreibstrahl (13) gleichzeitig dieselbe Spur auf der Speicherplatte (11) abtasten.

12. Vorrichtung nach einem der Ansprüche 1 bis 10, dadurch gekennzeichnet, dass der Linsenschlitten (17) derart beweglich ist, dass die Auftreffpunkte des Vorschreibstrahls (21) und des Schreibstrahls (13) unter Ausbildung einer Vielzahl von im wesentlichen kreisförmiger und konzentrischer Aufzeichnungsspuren in radialer Richtung auf der Speicherplatte (11) verschiebbar sind, ferner dass der Linsenschlitten (17) derart ausgebildet ist, dass die Auftreffpunkte des Vorschreibstrahls (21) und des Schreibstrahls (13) in bezug auf die rotierende Speicherplatte unterschiedliche Radien aufweisen, wobei der Vorschreibstrahl die jeweilige Aufzeichnungsspur jeweils um wenigstens eine Umdrehung der Speicherplatte vor dem Schreibstrahl abtastet, und dass die Steuereinrichtungen einen Speicher aufweisen, in welchem der jeweilige Ort eines Defektbereiches entlang des Kreisumfangs der Speicherplatte einspeicherbar ist.

13. Vorrichtung nach einem der vorangegangenen Ansprüche, dadurch gekennzeichnet, dass im Bereich des Linsenschlittens (17) zusätzlich ein die Reflexionseigenschaften der Speicherplatte nicht beeinflussender Fokusstrahl (37) erzeugt ist, welcher vor dem eigentlichen Schreibstrahl (13) auf der Speicherplatte (11) zum Auffallen gelangt, und dass die Defektdetektoreinrichtungen derart ausgebildet sind, dass durch Erfassung des reflektierten Fokusstrahls ein Defektsignal immer dann erzeugt ist, wenn der reflektierte Fokusstrahl im Vergleich zum reflektierten Vorschreibstrahl eine um einen vorgegebenen Wert übersteigende Intensität aufweist.

14. Vorrichtung nach einem der Ansprüche 1 bis 10, dadurch gekennzeichnet, dass der Linsenschlitten (17) derart bewegbar ist, dass die Auftreffpunkte des Vorschreibstrahls (21) und des Schreibstrahls (13) auf der Speicherplatte (11) unter Ausbildung einer Vielzahl von im wesentlichen kreisförmiger und konzentrischer Aufzeichnungsspuren in radialer Richtung verschiebbar sind, wobei mit Hilfe des Linsenschlittens (17) der Vorschreibstrahl (21) und der Schreibstrahl (13) derart positioniert sind, dass jede Aufzeichnungsspur bei alternierenden Umdrehungen der Speicherplatte zuerst von dem Vorschreibstrahl (21) und dann von dem Schreibstrahl (13) beaufschlagbar sind, ferner dass die Steuereinrichtungen einen Speicher aufweisen, in welchem die Stelle eines jeweiligen Defektbereiches entlang des Umfangs der Speicherplatte einspeicherbar ist, und dass die Steuereinrichtungen derart ausgebildet sind, dass beim Auftreffen des Schreibstrahls auf einer Stelle, welche zuvor als defekter Bereich markiert worden ist, beim darauffolgenden Umlauf der Speicherplatte das jeweilige Datensignal von dem Modulator abgeschaltet und das Defektfeststellungssignal eingeschaltet ist.

15. Vorrichtung nach Anspruch 14, dadurch gekennzeichnet, dass die Steuereinrichtungen derart ausgebildet sind, dass jeweils während jener Umdrehungen der Speicherplatte, bei welchen das Datensignal von dem Modulator abgeschaltet ist, der Vorschreibstrahl die Speicherplatte auf Vorhandensein von Defektbereichen abtastet, während während jener Umdrehungen der Speicherplatte, während welcher das Aufzeichnen eines Datensignals mit Hilfe des Schreibstrahls erfolgt, der Vorschreibstrahl dazu verwendet ist, dass die Speicherplatte an einer dem Auftreffpunkt des Schreibstrahls folgenden Stelle im Hinblick auf eine Kontrolle der richtigen Aufzeichnung des Datensignals beaufschlagt ist.

16. Vorrichtung nach einem der vorangegangenen Ansprüche, dadurch gekennzeichnet, dass die Defektdetektoreinrichtungen ein Hochpassfilter aufweisen, mit welchem rasche Intensitätsänderungen des reflektierten Vorschreibstrahles (21) feststellbar sind, und dass zusätzlich ein Schwellwertdetektor vorgesehen ist, mit welchem bei Überschreiten eines vorgegebenen Schwellwerts der Amplituden der Intensitätsänderungen das Defektsignal ableitbar ist.

17. Vorrichtung nach Anspruch 1, gekennzeichnet durch den Einsatz der folgenden Elemente:

– einem Aufzeichnungsmedium in Form eines lichtreflektierenden Speichermediums,

– Elementen zum Modulieren der Intensität eines Schreibstrahls in Abhängigkeit des zugeführten Datensignals,

– einer Anordnung zur Erzeugung eines Lesestrahls,

– einen Linsenschlitten, welcher den Lesestrahl und den intensitätsmodulierten Schreibstrahl auf das Speichermedium richtet, wobei einerseits der Schreibstrahl eine die Reflexionseigenschaften des Speichermediums an der Auftreffstelle verändernde Spitzenintensität besitzt, während andererseits der Lesestrahl eine die Reflexionseigenschaften des Speichermediums an der Auftreffstelle nicht beeinflussende Intensität aufweist,

– Antriebseinrichtungen zum Drehen des Speichermediums bei gleichzeitiger Beaufschlagung desselben mit dem Lese- und dem Schreibstrahl,

– eine im Bereich des Linsenschlittens angeordnete Positioniereinrichtung, welche den Lesestrahl und den Schreibstrahl derart zueinander positioniert, dass der Lesestrahl in einem gewissen Abstand nach dem Schreibstrahl auf das Speichermedium fällt, wobei der reflektierte Lesestrahl eine Intensität aufweist, welche dem auf dem Speichermedium aufgezeichneten Schreibstrahl entspricht, und

– eine Antriebseinrichtung für den Linsenschlitten, mit welcher derselbe quer zu den auf dem Speichermedium aufgezeichneten Daten verschiebbar ist, demzufolge die Datensignale in einer Vielzahl nebeneinander angeordneter Aufzeichnungsspuren auf dem Speichermedium aufgezeichnet sind, wobei:

– das Speichermedium eine Speicherplatte ist,

– ein Beugungsgitter (35) vorgesehen ist, mit welchem aus einem einzelnen Lichtstrahl konstanter Intensität ein Vorschreibstrahl (21) sowie ein Lesestrahl (15) gebildet sind,

– mit Hilfe des Linsenschlittens (17) der Vorschreibstrahl (21), der Lesestrahl (15) und der intensitätsmodulierte Schreibstrahl (13) auf die Speicherplatte (11) projizierbar sind, wobei der Vorschreibstrahl (21) eine die Reflexionseigenschaften der Speicherplatte nicht beeinflussende Intensität aufweist,

– die Antriebseinrichtung (19) die Speicherplatte (11) derart in Drehung versetzt, dass dieselbe von dem Vorschreibstrahl (21), dem Schreibstrahl (13) und dem Lesestrahl (15) abtastbar ist,

– der Linsenschlitten (17) den Vorschreibstrahl (21), den Lesestrahl (15) und den Schreibstrahl (13) derart relativ zueinander positioniert, dass der Vorschreibstrahl (21) um einen bestimmten Betrag vor dem Schreibstrahl (13) auf die Speicherplatte (11) auftrifft und der reflektierte Vorschreibstrahl eine Intensität aufweist, welche den Reflexionseigenschaften der Speicherplatte am Auftreffpunkt unmittelbar vor dem Schreibstrahl entspricht,

– der Linsenschlitten (17) in radialer Richtung zur Speicherplatte (11) derart verschiebbar ist, dass das Datensignal in einer Vielzahl von im wesentlichen gleichförmigen und konzentrisch zueinander angeordneten Spuren aufzeichenbar ist,

– mit Hilfe der Defektdetektoreinrichtungen eine Überwachung des reflektierten Vorschreibstrahls erfolgt und ein Defektsignal erzeugt ist, sobald die Intensität des reflektierten Vorschreibstrahls einen vorgegebenen Schwellenwert unterschreitet, wodurch das Vorhandensein eines nicht reflektierten Defektbereiches auf der Speicherplatte (11) mit Hilfe des Vorschreibstrahls angezeigt ist,

– die Steuereinrichtungen derart ausgelegt sind, dass sie beim Auftreten eines Defektsignals eine Abschaltung des Datensignals von dem Modulator bewirken und an dessen Stelle ein Defekt-Flagsignal anlegen, um auf diese Weise auf der Speicherplatte unmittelbar vor jedem festgestellten Defektbereich eine Markierung aufzuzeichnen, und

– die Defektdetektoreinrichtungen schliesslich noch Abtastelemente aufweisen, welche den reflektierten Lesestrahl überwachen und die Abgabe eines Defektsignals beendigen, sobald die Intensität des mit dem Defekt-Flagsignal modulierten Lesestrahls während eines vorgegebenen Zeitintervalls angedauert hat, worauf die Steuereinrichtungen zum Ansprechen gelangen, um auf diese Weise das Datensignal erneut der Modulatoreinrichtung im Hinblick auf eine Aufzeichnung auf der Speicherplatte zuzuführen.

18. Vorrichtung nach Anspruch 17, dadurch gekennzeichnet, dass mit Hilfe des Beugungsgitters (35) zusätzlich ein Fokussierstrahl erzeugt ist, welcher unter Einsatz des Linsenschlittens (17) derart auf die Speicherplatte (11) projiziert ist, dass derselbe um einen vorgegebenen Betrag vor dem Schreibstrahl und zwischen dem Vorschreibstrahl und dem Lesestrahl auf der Speicherplatte zum Auffallen gelangt, wobei der Fokussierstrahl eine Intensität aufweist, dass an der Oberfläche der Speicherplatte eine Reflexion stattfindet, ohne jedoch die Reflexionseigenschaften der Speicherplatte zu beeinflussen, und dass die Defektdetektoreinrichtungen derart ausgebildet sind, dass in Abhängigkeit des reflektierten Fokussierstrahls ein Defektsignal erzeugt ist, sobald der reflektierte Fokussierstrahl im Vergleich zum reflektierten Vorschreibstrahl eine um einen vorgegebenen Betrag überschreitende Intensität aufweist.

19. Vorrichtung zur Aufzeichnung von Signaldaten auf einer lichtreflektierenden Speicherplatte mit einer Einrichtung zur Modulation der Intensität eines Schreibstrahls in Abhängigkeit eines Datensignals, einem Linsenschlitten einschliesslich einer Lichtquelle zur Erzeugung eines Schreibstrahls und Projizierung des intensitätsmodulierten Schreibstrahls auf die Speicherplatte, wobei der Schreibstrahl eine die Reflexionseigenschaften der Speicherplatte an der Auftreffstelle beeinflussende Spitzenintensität aufweist und einer Antriebseinrichtung, mit welcher die Speicherplatte in bezug auf den Schreibstrahl in Drehung versetzbar ist, demzufolge die Speicherplatte mit Hilfe des Schreibstrahls beaufschlagbar ist und das Datensignal mit Hilfe des Schreibstrahls entlang einer Aufzeichnungsspur zur Aufzeichnung gelangt, dadurch gekennzeichnet,

– dass der Linsenschlitten eine Lichtquelle zur Erzeugung eines Vorschreibstrahls aufweist, welcher gleichzeitig mit dem intensitätsmodulierten Schreibstrahl in Richtung der Speicherplatte geführt ist, wobei der Vorschreibstrahl eine die Reflexionseigenschaften der Speicherplatte an der Auftreffstelle nicht beeinflussende Intensität aufweist,

– dass die Antriebseinrichtung die Speicherplatte in bezug auf den Vorschreibstrahl und den Schreibstrahl rotiert, demzufolge beide Strahlen gleichzeitig entlang der Oberfläche der Speicherplatte entlanggeführt sind,

– dass der Linsenschlitten (17) den Vorschreibstrahl und den Schreibstrahl derart zueinander positioniert, dass der Vorschreibstrahl einen nicht aufgezeichneten Bereich der Speicherplatte in einem gewissen Abstand vor dem Schreibstrahl beaufschlagt,

– dass Defektdetektoreinrichtungen derart ausgelegt sind, dass sie in Übereinstimmung mit der Reflektivität der Speicherplatte an der Auftreffstelle des Vorschreibstrahls die Intensität desselben überwachen und ein Defektsignal erzeugen, sobald eine die Reflektivität beeinflussende Defektstelle auf der Speicherplatte abgetastet ist und

– dass Steuereinrichtungen in Abhängigkeit des Auftretens eines Defektsignals das Datensignal von der Modulatoreinrichtung abtrennen, wodurch die Aufzeichnung des Datensignals auf der Speicherplatte zu jenem Zeitpunkt unterbrochen ist, sobald eine Defektstelle, bevor dieselbe in den Bereich des Schreibstrahls gelangt, mit Hilfe des Vorschreibstrahls festgestellt ist.

20. Verfahren zum Aufzeichnen von Datensignalen auf einem sich bewegenden Speichermedium, bei welchem unter Einsatz von Signalwandlereinrichtungen ein Datensignal auf dem Aufzeichnungsmedium aufgezeichnet wird, bei welchem ferner unter Einsatz von Defektdetektoreinrichtungen vor dem eigentlichen Einschreibvorgang das Speichermedium auf Vorhandensein von die Aufzeichnung des Datensignals störenden Defektstellen unter eventueller Abgabe eines Defektsignals abgetastet wird und bei welchem in Abhängigkeit des Auftretens eines Defektsignals die Weiterleitung des Datensignals unterbrochen und gleichzeitig ein spezielles Defekt-Flagsignal in Übereinstimmung mit dem Defektsignal auf dem Aufzeichnungsmedium aufgezeichnet wird, dadurch gekennzeichnet, dass unter Einsatz der Signalwandlereinrichtungen das Aufzeichnungsmedium ohne Änderung seiner Aufzeichnungseigenschaften auf das Vorhandensein von Defektbereichen abgetastet wird und dass im Hinblick auf eine Markierung der jeweiligen Stelle des festgestellten Defektbereiches anstelle des jeweiligen Datensignals ein Defekt-Flagsignal an die Signalwandlereinrichtungen gegeben wird, welche somit das betreffende Defekt-Flagsignal entlang der Aufzeichnungsspur aufzeichnet.

21. Verfahren nach Anspruch 20, dadurch gekennzeichnet, dass am Ende eines festgestellten Defektbereiches das erzeugte Defektsignal zur Unterbrechung gebracht wird und dass im Anschluss an die Unterbrechung des Defektsignals erneut das Datensignal an die Signalwandlereinrichtungen geleitet wird.

22. Verfahren nach Anspruch 21, dadurch gekennzeichnet, dass zur Feststellung des Endes einer Defektstelle das Aufzeichnungsmedium an einer Stelle abgetastet wird, welche den Signalwandlereinrichtungen um einen vorgegebenen Betrag nacheilt.

23. Verfahren nach Anspruch 20, dadurch gekennzeichnet, dass das Speichermedium in einem vorgegebenen Abstand hinter der Signalwandlereinrichtung abgetastet wird, um auf diese Weise das Vorhandensein eines auf dem Speichermedium aufgezeichneten Defekt-Flagsignals festzustellen, und dass die Abgabe des Defektsignals unterbrochen wird, sobald das Defekt-Flagsignal während eines vorgegebenen Zeitintervalls festgestellt worden ist.

24. Verfahren nach Anspruch 20, dadurch gekennzeichnet,

– dass als Speichermedium eine lichtreflektierende Speicherplatte verwendet wird,

– dass bei dem Abtasten des Speichermediums ein mit dem Datensignal modulierter Schreibstrahl hoher Intensität auf dasselbe gerichtet wird, wodurch während der Rotation der Speicherplatte eine Folge von im Abstand voneinander angeordneter, nicht reflektierender Bereiche in Abhängigkeit des aufzuzeichnenden Datensignals gebildet wird,

– dass zusätzlich ein Vorschreibstrahl mit relativ geringer Intensität auf die Speicherplatte projiziert wird, wodurch ein reflektierter Strahl mit einer der Reflektivität der Speicherplatte entsprechenden Intensität erzeugt wird und

– dass durch Überwachung des reflektierten Lichtstrahls ein Defektsignal erzeugt wird, sobald die Signalintensität unterhalb eines vorgegebenen Schwellenwertes fällt.

**Claims**

1. Apparatus for recording data signals on a moving storage medium, comprising:

– transducer means which scan the storage medium (11) and record data signals thereon along a recording track,

– defect detection means which scan the storage medium before the transducer means, detect defect regions inhibiting the recording of data signals, and emit corresponding defect signals accordingly, also

– control means which in dependence on the occurrence of defect signals interrupt the emission of data signals to the transducer means and bring about the recording of a special defect signal on the storage medium instead of the recording of data signals on the storage medium, characterised in that,

– before the transducer means (17, 23, 25, 61, 89) the defect detection means (21, 48, 65) scan the storage medium (11) without modification of its storage properties, and

– when a defect signal occurs the control means (39 to 63) emit a defect flag signal instead of the data signal to the transducer means (17, 23, 25, 61, 89) which accordingly record a defect flag signal along the recording track in accordance with the defect signal, and mark the respective defect regions in this way.

2. Apparatus according to claim 1, characterised in that at the end of each defect region the defect detection means (65) interrupt the emission of a defect signal, and that at the time the defect signal disappears the control means emit the data signal anew to the transducer means.

3. Apparatus according to claim 1 or 2, characterised in that the defect detaction means (65) additionally comprise scanning elements (15, 45, 49) which scan the storage medium locally by a prescribed amount after the transducer means and in this way ascertain at what instant existing defect regions of the storage medium pass out of the scanning range of the transducer means.

4. Apparatus according to claim 1 or 2, characterised in that the defect detection means additionally comprise scanning elements (15, 45, 49) which scan the storage medium locally by a prescribed amount after the transducer means, detect the presence of a defect flag signal on the storage medium, and end the emission of a defect signal as soon as the defect flag signal has been detected for a specific length of time.

5. Apparatus according to one of the preceding claims, characterised in

– that the storage medium is a light-reflecting storage disc (11),

– that the transducer means comprise an arrangement (27, 29, 31) with which a high-intensity write beam (13) modulated with the data signal to be recorded is directable in the direction of the storage disc (11), as a result of which a sequence of spaced non-reflecting regions can be produced on the rotating storage disc, and

– that the defect detection means comprise an arrangement with which a pre-write beam (21) of relatively low intensity is so directable in the direction of the storage disc (11) that a reflected light beam is formed with intensity variations corresponding to the variations of the reflection properties of the storage disc, this beam being used for production of a defect signal as soon as the intensity of the reflected light beam is below a predetermined threshold value.

6. Apparatus according to claim 5, characterised in that it comprises the following elements:

a) a modulator (25) which modulates the intensity of the write beam (13) in accordance with the data signal to be recorded,

b) a lens carriage (17) which directs both the pre-write beam (21) and also the intensity-modulated write beam (13) in the direction of the storage disc (11), the write beam having a peak intensity with which the reflection properties of the storage disc at the point of impingement are variable, whereas the pre-write beam has such a low intensity that at the point of impingement no variations occur in the reflection properties of the storage disc,

c) a drive means with which the storage disc (11) can be rotated relatively to the pre-write beam (21) and the write beam (13), whereby the two beams are conducted along the surface of the storage disc and recording of the data signal is carried out, the lens carriage (17) so positioning the pre-write beam (21) and the write beam (13) in relation to one another that the pre-write beam (37) impinges on the storage disc by a prescribed amount before the write beam (13), and the defect detection means emitting a corresponding defect signal through monitoring of the intensity variations of the reflected pre-write beam (21) on the scanning of a non-reflected defect region of the storage disc.

7. Apparatus according to claim 6, characterised in that the control means emit a special defect flag signal to the modulator (25) when a defect signal occurs, whereby a defect flag signal is recorded on the storage disc (11) at the location of each defect region.

8. Apparatus according to claim 6 or 7, characterised in that the control means after a predetermined time interval after the detection of a defect region on the storage disc uncouple the data signal from the modulator (25).

9. Apparatus according to one of claims 6 to 8, characterised in that a read beam (15) which does not influence the reflection properties of the storage disc is directed on to the latter additionally at a predetermined interval after the write beam (13) with the aid of the lens carriage (17), whereby by reflection a reflected read beam is produced the intensity of which is modulated in accordance with the recorded data signal, and that the defect detection means are so constructed that by means of the modulation of the intensity of the reflected read beam they detect the presence of a defect flag signal and terminate the emission of a defect signal as soon as the detected defect flag signal has occurred during a predetermined time interval.

10. Apparatus according to one of claims 6 to 9, characterised in that the pre-write beam (21) and the read beam (15) are derived from one and the same light source with the use of a diffraction grating (35).

11. Apparatus according to one of the preceding claims, characterised in that the lens carriage (17) is movable in such a manner that the points of impingement of the pre-write beam (21) and the write beam (13) shift in the radial direction on the storage disc (11), whereby a plurality of substantially circular and concentric recording tracks are formed on said disc, and that the lens carriage (17) is so constructed that the pre-write beam (21) and the write beam (13) scan the same track on the storage disc (11) at the same time.

12. Apparatus according to one of claims 1 to 10, characterised in that the lens carriage (17) is movable in such a manner that the points of impingement of the pre-write beam (21) and the write beam (13) are shiftable in the radial direction on the storage disc (11), forming a plurality of substantially circular and concentric recording tracks, furthermore that the lens carriage (17) is so constructed that the points of impingement of the pre-write beam (21) and of the write beam (13) have different radii in relation to the rotating storage disc, the pre-write beam always scanning the respective recording track by at least one revolution of the disc ahead of the write beam, and that the control means have a store wherein the respective location of a defect region along the circular extent of the storage disc can be stored.

13. Apparatus according to one of the preceding claims, characterised in that in the region of the lens carriage (17) there is additionally produced a focus beam (37) which does not influence the reflection properties of the storage disc and which impinges on the storage disc (11) before the actual write beam (13), and that the defect detection means are so constructed that through detection of the reflected focus beam a defect signal is produced whenever the reflected focus beam has an intensity which predominates in comparison with the reflected pre-write beam by a predetermined amount.

14. Apparatus according to one of claims 1 to 10, characterised in that the lens carriage (17) is movable in such a manner that the points of impingement of the pre-write beam (21) and the write beam (13) on the storage disc (11) are shiftable in the radial direction, forming a plurality of substantially circular and concentric recording tracks, and by means of the lens carriage (17) the pre-write beam (21) and the write beam (13) are so positioned that, with alternating revolutions of the storage disc, each recording track can be impinged on first by the pre-write beam (21) and then by the write beam (13), furthermore that the control means comprise a store wherein there can be stored the position of each respective defect region along the circumference of the storage disc, and that the control means are so constructed that when the write beam impinges on a position which had previously been marked as a defect region, at the then subsequent revolution of the storage disc the respective data signal is decoupled from the modulator and the defect detection signal is coupled.

15. Apparatus according to claim 14, characterised in that the control means are so constructed that in each case during those revolutions of the storage disc wherein the data signal is decoupled from the modulator the pre-write beam scans the storage disc for the presence of defect regions, whereas during those revolutions of the storage disc during which a data signal is recorded with the aid of the write beam the pre-write beam is used for impingement on the storage disc at a situation following the point of impingement of the write beam with a view to monitoring the correct recording of the data signal.

16. Apparatus according to one of the preceding claims, characterised in that the defect detection means comprise a high-pass filter with which rapid intensity variations of the reflected pre-write beam (21) are detectable, and that a threshold value detector is provided additionally with which the defect signal can be derived when the amplitudes of the intensity changes exceed a predetermined threshold value.

17. Apparatus according to claim 1, characterised by the use of the following elements:

– a recording medium in the form of a light-reflecting storage medium,

– elements for modulating the intensity of a write beam in dependence on the data signal supplied,

– an arrangement for producing a read beam,

– a lens carriage which directs the read beam and the intensity-modulated write beam on to the storage medium, and on the one hand the write beam has a peak intensity modifying the reflection properties of the storage medium at the point of impingement, whereas on the other hand the read beam has an intensity which does not influence the reflection properties of the storage medium at the point of impingement,

– drive means for rotating the storage medium whilst the latter is acted upon at the same time by the read beam and the write beam,

– a positioning device which is arranged in the region of the lens carriage and which positions the read beam and the write beam in such a manner relatively to one another that the read beam falls on the storage medium at a specific distance after the write beam, the reflected read beam having an intensity which corresponds to the write beam recorded on the storage medium, and

– a drive means for the lens carriage, with which means the carriage is displaceable transversely to the data recorded on the storage medium, whereby the data signals are recorded in a plurality of side-by-side recording tracks on the storage medium, and:

– the storage medium is a storage disc,

– a diffraction grating (35) is provided with which a pre-write beam (21) and also a read beam (15) are formed from a single light beam of constant intensity,

– with the aid of the lens carriage (17) the pre-write beam (21), the read beam (15) and the intensity-modulated write beam (13) are directable on to the storage disc (11), and the pre-write beam (21) has an intensity which does not influence the reflection properties of the storage disc,

– the drive means (19) rotates the storage disc (11) in such a manner that the said disc is scannable by the pre-write beam (21), the write beam (13) and the read beam (15),

– the lens carriage (17) so positions the pre-write beam (21), the read beam (15) and the write beam (13) relatively to one another that the pre-write beam (21) impinges on the storage disc (11) to a specific extent before the write beam (13), and the reflected pre-write beam has an intensity which corresponds to the reflection properties of the storage disc at the point of impingement immediately before the write beam,

– the lens carriage (17) is displaceable in the radial direction relatively to the storage disc (11) in such a manner that the data signal is recordable in a plurality of substantially uniform tracks situated concentrically with respect to one another,

– with the aid of the defect detection means a monitoring of the reflected pre-write beam is carried out and a defect signal is produced as soon as the intensity of the reflected pre-write beam goes below a predetermined threshold value, whereby the presence of a non-reflected defect region on the storage disc (11) is indicated by means of the pre-write beam,

– the control means are so designed that when a defect signal occurs they effect decoupling of the data signal from the modulator and apply in its place a defect flag signal, in order thus to record a mark on the storage disc directly before each detected defect region, and

– finally, the defect detection means also comprise scanning elements which monitor the reflected read beam and end the emission of a defect signal as soon as the intensity of the read beam modulated with the defect flag signal has continued over a predetermined time interval, whereupon the control means respond to feed the data signal again in this way to the modulator means with a view to recording on the storage disc.

18. Apparatus according to claim 17, characterised in that with the aid of the diffraction grating (35) a focus beam is additionally produced which with the use of the lens carriage (17) is projected on to the storage disc (11) in such a manner that it impinges on the storage disc by a specific amount before the write beam and between the pre-write beam and the read beam, and the focus beam has an intensity such that reflection occurs at the surface of the storage disc but without influencing the reflection properties of the storage disc, and that the defect detection means are so constructed that a defect signal is produced in dependence on the reflected focus beam as soon as the reflected focus beam has, relatively to the reflected pre-write beam, an intensity which exceeds by a predetermined amount.

19. Apparatus for the recording of signal data on a light-reflecting storage disc with a means for modulating the intensity of a write beam in dependence on a data signal, a lens carriage including a light source for producing a write beam and projecting the intensity-modulated write beam on the storage disc, and the write beam has a peak intensity influencing the reflection properties of the storage disc at the place of impingement, and with a drive means with which the storage disc is rotatable in relation to the write beam, whereby the storage disc can be impinged upon by the write beam and the data signal is recorded with the use of the write beam along a recording track, characterised in that

– the lens carriage comprises a light source for producing a pre-write beam which at the same time as the intensity-modulated write beam is directed on to the storage disc, the pre-write beam having an intensity which does not influence the reflection properties of the storage disc at the point of impingement,

– the drive means rotates the storage disc relatively to the pre-write beam and the write beam, whereby the two beams are made to pass simultaneously along the surface of the storage disc,

– the lens carriage (17) so positions the pre-write beam and the write beam relatively to one another that the pre-write beam impinges on a non-recorded region of the storage disc at a specific distance before the write beam,

– defect detection means are so designed that they monitor the intensity of the pre-write beam in accordance with the reflectivity of the storage disc at the point of impingement of the pre-write beam and produce a signal as soon as a defect location influencing reflectivity is scanned on the storage disc, and

– control means decouple the data signal from the modulator means in accordance with the occurrence of a defect signal, whereby the recording of the data signal on the storage disc is interrupted at that instant as soon as a defect location is detected with the aid of the pre-write beam before said location arrives into the region of the write beam.

20. Method for the recording of data signals on a moving storage medium, wherein with the use of transducer means a data signal is recorded on the recording medium, wherein moreover, using defect detection means, the storage medium is scanned before the actual write operation for the presence of defect locations which would disturb the recording of the data signal, with emission of a defect signal if appropriate, and wherein in accordance with the occurrence of a defect signal the transmission of the data signal is interrupted and at the same time a special defect flag signal is recorded on the recording medium in accordance with the defect signal, characterised in that with the use of transducer means the recording medium is, without influencing its recording properties, scanned for the presence of defect regions, and that with a view to marking the particular location of the detected defect region there is transmitted to the transducer means in place of the particular data signal concerned a defect flag signal, which means thus record the relevant defect flag signal along the recording track.

21. Method according to claim 20, characterised in that at the end of a detected defect region the defect signal produced is interrupted and that following the interruption of the defect signal the data signal is transmitted anew to the transducer means.

22. Method according to claim 21, characterised in that to detect the end of a defect location the recording medium is scanned at a place which trails the transducer means by a predetermined amount.

23. Method according to claim 20, characterised in that the storage medium is scanned at a predetermined distance after the transducer means in order thus to detect the presence of a defect flag signal recorded on the storage medium and that the emission of the defect signal is interrupted as soon as the defect flag signal has been detected during a predetermined period of time.

24. Method according to claim 20, characterised in that

– a light-reflecting storage disc is used as storage medium,

– in the scanning of the storage medium a high-intensity write been modulated with the data signal is directed on to said medium, whereby during the rotation of the storage disc a sequence of spaced-apart non-reflecting regions is produced in accordance with the data signal to be recorded,

– a pre-write beam of relatively low intensity is additionally projected on to the storage disc, whereby a reflected beam is produced which has an intensity corresponding to the reflectivity of the storage disc, and

– through monitoring of the reflected light beam a defect signal is produced as soon as the signal intensity falls below a predetermined threshold value.

**Revendications**

1. Dispositif pour l'enregistrement de signaux de données sur un milieu de mémoire, comprenant

– des installations de convertisseur de signaux, qui explorent ou balayent le milieu de mémoire (11) et enregistrent sur celui-ci les signaux de données le long des pistes d'enregistrement,

– des installations détectrices de défauts, qui balayent ou explorent le milieu de mémoire avant les installations de convertisseur de signaux, constatent des zones de défaut empêchant l'enregistrement des signaux de données et produisent en conséquence des signaux de défaut correspondants, ainsi que

– des installations de commande qui, en fonction de la présence d'un signal de défaut, interrompent l'émission des signaux de données aux installations de convertisseur de signaux et provoquent, à la place de l'enregistrement des signaux de données sur le milieu de mémoire, l'enregistrement d'un signal de défaut spécifique sur le milieu de mémoire, caractérisé en ce que,

– les installations détectrices de défaut (21, 48, 65) balayent ou explorent le milieu de mémoire (11) avant les installations de convertisseur de signaux (17, 23, 25, 61, 89) sans modification de ses propriétés de mémoire ou de mémorisation et,

– les installations de commande (39 à 63) transmettent lors de la manifestation d'un signal de défaut un signal drapeau de défaut à la place du signal de données à l'installation de convertisseur de signaux (17, 23, 25, 61, 89) qui enregistrent en conséquence et suivant le signal de défaut un signal drapeau de défaut le long de la piste d'enregistrement et marquent les zones de défaut correspondantes de cette manière.

2. Dispositif selon la revendication 1, caractérisé en ce qu'à la fin chaque zone de défaut respective, les installations détectrices de défauts (65) interrompent l'émission d'un signal de défaut et que les installations de commande transmettent à nouveau le signal de données à l'installation de convertisseur de signal, à l'instant de la disparition du signal de défaut.

3. Dispositif selon l'une des revendications 1 ou 2, caractérisé en ce que les installations détectrices de défauts (65) comportent additionnellement des éléments de balayage (15, 45, 49), qui balayent le milieu de mémoire ou de mémorisation localement selon une quantité déterminée en arrière de l'installation de convertisseur de signal et constatent de cette manière l'instant de temps auquel des zones de défaut présente dans le milieu de mémoire parviennent hors de la zone de balayage des installations de convertisseur de signal.

4. Dispositif selon la revendication 1 ou 2, caractérisé en ce que les installations détectrices de défauts comportent supplémentairement des éléments de balayage (15, 45, 49) qui balayent le milieu de mémoire localement d'une quantité prédéterminée derrière ou après les installations de convertisseur de signal, pour détecter la présence d'un signal-drapeau de défaut sur le milieu de mémoire et mettent fin à l'émission d'un signal de défaut dès la détection du signal drapeau de défaut pendant une durée de temps prédéterminée.

5. Dispositif selon l'une des revendications précédentes, caractérisé en ce que

– le milieu de mémoire est une plaque de mémoire réfléchissant la lumière,

– les installations de convertisseur de signal comportent un agencement (27, 29, 31) par l'intermédiaire duquel un faisceau d'écriture (13) d'intensité élevées est modulé par le signal de données à enregistrer et susceptible d'être quidé en direction de la plaque de mémoire (11), si bien qu'une séquence de zones non réfléchissantes et décalées les unes et les autres puisse être produite sur la plaque de mémoire, et

– en ce que les installations détectrices de défauts comportent un agencement à l'aide duquel un faisceau de pré-écriture (21) d'une intensité relativement faible peut être guidée en direction de la plaque de mémoire (11) de telle façon qu'un faisceau lumineux réfléchi peut être formé qui présente des changements ou variations d'intensité correspondant aux modifications ou variations des propriétés de réflexion de la plaque mémoire et qui peut être utilisé pour la production d'un signal de défaut dès que l'intensité du faisceau lumineux réfléchi se trouve en dessous d'une valeur de seuil prédéterminée.

6. Dispositif selon la revendication 5, caractérisé en ce qu'il se compose des éléments suivants:

a) un modulateur (25) qui module l'intensité du faisceau d'écriture (13) en correspondance au signal de données à enregistrer,

b) un chariot de lentilles (17) qui guide à la fois le faisceau de pré-écriture (21) et le faisceau écriture (13) modulé en intensité en direction de la plaque mémoire (11), le faisceau d'écriture présentant une intensité de pointe permettant de modifier les propriétés de réflexion de la plaque mémoire à l'endroit d'impact, tandis que le faisceau de pré-écriture présente une faible intensité telle qu'au point d'impact aucune modification des propriétés de réflexion de la plaque mémoire ne se produise,

c) une installation d'entraînement permettant la mise en rotation de la plaque mémoire (11) par rapport au faisceau de pré-écriture (21) et au faisceau d'écriture (13), de façon que les deux faisceaux soient guidés le long de la surface de la plaque mémoire et que l'enregistrement du signal de données soit effectué, le chariot de lentilles (17) positionnant le faisceau de pré-écriture (21) et le faisceau d'écriture (13) de telle façon, l'un par rapport à l'autre, que le faisceau de pré-écriture (37) frappe la plaque de mémoire selon une quantité déterminée avant le faisceau d'écriture (13) et les installations détectrices de défauts, par effet de surveillance des modifications ou variations d'intensité du faisceau de pré-écriture (21) réfléchi, produisent un signal de défaut correspondant, lors du balayage d'une zone de défaut non réfléchie de la plaque mémoire.

7. Dispositif selon la revendication 6, caractérisé en ce que les installations de commande transmettent au modulateur (25) un signal-drapeau de défaut spécifique lors de l'impact d'un signal de défaut de telle façon que sur la plaque-mémoire (11) un enregistrement du signal de drapeau de défaut s'effectue à l'endroit de chaque zone de défaut.

8. Dispositif selon l'une des revendications 6 ou 7, caractérisé en ce que les installations de commande isolent du modulateur, le signal de données, après un intervalle de temps prédéterminé à la suite de la détection d'une zone de défaut sur la plaque-mémoire.

9. L'installation selon l'une des revendications 6 à 8, caractérisé en ce qu'un faisceau de lecture (15) est dirigé supplémentairement sur la plaque-mémoire, qui n'influence pas les propriétés de réflexion de cette plaque, à l'aide du chariot de lentilles (17), à une distance prédéterminée du faisceau d'écriture (13), de façon qu'un faisceau de lecture réfléchi soit formé par la réflexion, dont l'intensité est modulée selon le signal de données enregistré, et en ce que les installations détectrices de défaut sont conformées de telle manière qu'elles constatent la présence d'un signal-drapeau de défauts d'après la modulation de l'intensité du faisceau d'écriture réfléchi et termine la production du signal de défaut dès que le signal-drapeau de défaut constaté soit manifeste pendant un intervalle de temps prédéterminé.

10. Dispositif selon l'une des revendications 6 à 9, caractérisé en ce que le faisceau de pré-écriture (21) et le faisceau de lecture (15) sont dévisés d'une même source lumineuse à l'aide d'une grille de diffraction (35).

11. Dispositif selon l'une des revendications précédentes, caractérisé en ce que le chariot de lentilles (17) est mobile de telle manière que les points d'impact du faisceau de pré-écriture (21) et du faisceau d'écriture (13) se déplacent dans une direction radiale sur la plaque-mémoire (11), de façon qu'une pluralité de pistes d'enregistrement sensiblement en forme de cercle ou concentriques se forment sur la plaque, et en ce que le chariot de lentilles (17) est conformé de telle manière que le faisceau de pré-écriture (21) et le faisceau d'écriture (13) balayent simultanément la même pise sur la plaque-mémoire (11).

12. Dispositif selon l'une des revendications 1 à 10, caractérisé en ce que le chariot de lentilles (17) est mobile de telle manière que les points d'impact du faisceau de pré-écriture (21) et du faisceau d'écriture (13) se déplacent dans la direction radiale sur la plaque-mémoire (11) en formant une pluralité de pistes d'enregistrement sensiblements circulaires et concentriques, que le chariot de lentilles (17) est conformé de telle manière que les points d'impacet du faisceau de pré-écriture et du faisceau d'écriture présentent des rayons différents par rapport à la plaque-mémoire rotative, le faisceau de pré-écriture balayant la piste d'enregistrement respective chaque fois au moins d'une rotation de la plaque-mémoire avant le faisceau d'écriture, et en ce que les installations de commande comprennent une mémoire dans laquelle le lieu ou l'emplacement respectif d'une zone de défaut peut être enregistré le long de la circonférence circulaire de la plaque-mémoire.

13. Dispositif selon l'une des revendications précédentes, caractérisé en ce que, dans la région du chariot de lentilles (17), est produit supplémentairement un faisceau foyer (37) qui n'influence pas les propriétés de réflexion de la plaque-mémoire et qui frappe la plaque-mémoire avant le faisceau d'écriture proprement dite (13), et en ce que les installations détectrices de défaut sont conformées de manière qu'en tenant compte du faisceau foyer réfléchi un signal de défaut réfléchi soit produit chaque fois que le faisceau foyer présente une intensité dépassant d'une quantité ou d'une valeur prédéterminée, par rapport au faisceau de pré-écriture réfléchi.

14. Dispositif selon l'une des revendications 1 à 10, caractérisé en ce que le chariot de lentilles (17) est déplaçable de manière que les points d'impact du faisceau de pré-écriture (21) et du faisceau d'écriture (13) sur la plaque-mémoire (11), avec formation d'un pluralité de pistes d'enregistrement sensiblement circulaires et concentriques, soient déplaçables radialement, le faisceau de pré-écriture (21) et le faisceau d'écriture (13) étant susceptibles d'être positionnés à l'aide du chariot de lentilles (17) detelle manière que chaque piste d'enregistrement lors des rotations alternantes de la plaque-mémoire soit sollicitée tout d'abord par le faisceau de pré-écriture (21) et ensuite par le faisceau d'écriture (13), et en ce que les installations de commande comportent un dispositif de stockage ou une mémoire, dans lequel l'endroit d'une zone de défaut respective peut être enregistré le long du pourtour de la plaque-mémoire, et en ce que les installations de commandes sont réalisées de telle manière que lors de l'impact du faisceau d'écriture sur un endroit qui était indiqué auparavant comme zone de défauts, le signal de données soit isolé du modulateur à la prochaine rotation de la plaque-mémoire et le signal de constatation de défauts soit mis en service.

15. Dispositif selon la revendication 14, caractérisé en ce que les dispositifs de commande sont réalisés de telle manière que chaque fois pendant les rotations de la plaque-mémoire, au cours desquelles le signal de données est isolé du modulateur, le faisceau de pré-écriture balaye la plaque-mémoire pour détecter la présence de zones de défauts, tandis que pendant les rotations de la plaque-mémoire, au cours desquelles l'enregistrement d'un signal de données se fait à l'aide du faisceau d'écriture, le faisceau de pré-écriture puisse être utilisé de façon que la plaque-mémoire puisse être sollicitée à un endroit suivant le point d'impact du faisceau d'écriture dans le but d'un contrôle de l'enregistrement correct du signal de données.

16. Dispositif selon l'une des revendications précédentes, caractérisé en ce que les installations détectrices de défauts comportent un filtre passe-haut, qui permet de constater des modifications d'intensité rapides du faisceau de pré-écriture (21) réfléchi, et en ce qu'un détecteur de valeurs de seuil est prévu supplémentairement, qui permet la formation d'un signal de défauts lors du dépassement d'une valeur de seuil pré-déterminées, des amplitudes des modifications d'intensité.

17. Dispositif selon la revendication 1, caractérisé par l'utilisation des éléments suivants:

– d'un milieu d'enregistrement en forme d'un milieu de mémoire réfléchissant la lumière,

– d'éléments pour moduler l'intensité d'un faisceau d'écriture en fonction du signal de données appliqué,

– d'un agencement pour la protection d'un faisceau de lecture,

– d'un chariot de lentilles adapté pour orienter le faisceau de lecture et le faisceau d'écriture modulé en intensité, sur le milieu mémoire, le faisceau d'écriture possédant une intensité de pointe modifiant les propriétés de réflexion du milieu mémoire à l'emplacement d'impact, tandis que le faisceau de lecture comprend une intensité qui n'influence pas les propriétés de réflexion du milieu mémoire à l'emplacement d'impact,

– des installations d'entraînement pour la rotation du milieu mémoire lors d'une sollicitation simultanée de celle-ci par le faisceau de lecture et le faisceau d'écriture,

– d'une installation de positionnement disposée dans la région du chariot de lentilles, qui positionne le faisceau de lecture et le faisceau d'écriture l'un par rapport à l'autre de telle manière que le faisceau de lecture frappe le milieu mémoire à une certaine distance après le faisceau d'écriture, le faisceau de lecture réfléchi comprenant une intensité qui correspond à celle du faisceau d'écriture enregistré sur le milieu mémoire, et

– d'une installation d'entraînement pour le chariot de lentilles, adaptée pour déplacer celui-ci perpendiculairement aux données enregistrées sur le milieu mémoire, si bien que les signaux de données soient enregistrés sur le milieu mémoire sur une pluralité de pistes d'enregistrement justaposées,

– le milieu mémoire étant une plaque mémoire,

– un filtre de diffraction (35) étant prévu, qui permet la formation d'un faisceau de pré-écriture (21) ainsi que d'un faisceau de lecture (15) à partir d'un faisceau lumineux unique d'intensité constant,

– le faisceau de pré-écriture (21), le faisceau de lecture (15) et le faisceau d'écriture (13) modulé en intensité étant susceptibles d'être projetés sur la plaque-mémoire (11) à l'aide du chariot de lentilles (17), le faisceau de pré-écriture (21) comprenant une intensité qui n'influence pas les propriétés de réfléxion de la plaque-mémoire,

– l'installation d'entraînement (19) entraîne en rotation la plaque-mémoire (11) de manière que celle-ci puisse être balayée par le faisceau de pré-écriture (21), le faisceau d'écriture (13) et le faisceau de lecture (15),

– le chariot de lentilles (17) positionnant le faisceau de pré-écriture (21), le faisceau de lecture (15) et le faisceau d'écriture (13) l'un par rapport aux autres de telle manière, que le faisceau de pré-écriture (21) frappe la plaque-mémoire (11) selon une quantité prédéterminée avant le faisceau d'écriture (13) et le faisceau de pré-écriture réfléchi comprenant une intensité qui correspond aux propriétés de réfléxion de la plaque-mémoire à l'emplacement d'impact immédiatement devant le faisceau d'écriture,

– le chariot de lentilles (17) étant déplaçable radialement par rapport à la plaque-mémoire de telle manière que le signal de données puisse être enregisté sur une multitude de pistes sensiblement uniformes et concentriques,

– une surveillance du faisceau de pré-écriture réfléchi étant effectuée à l'aide des installations détectrices de défauts et un signal de défauts étant produit dès que l'intensité du faisceau de pré-écriture réfléchi tombe en dessous d'une valeur de seuil prédéterminée, ce qui permet l'affichage ou l'indication de la présence d'une zone de défauts non réfléchie sur la plaque-mémoire l'aide du faisceau de pré-écriture,

– les installations de commande étant adaptées de telle manière qu'elles provoquent l'isolation du signal de données, du modulateur lors de la manifestation d'un signal de défauts et appliquent à la place de ce signal un signal drapeau de défauts pour enregistrer de cette manière une marque sur la plaque-mémoire, immédiatement devant chaque zone de défauts détectée, et

– les installations détectrices de défauts comprenant en outre des éléments d'exploration ou de balayage, qui surveillent le faisceau de lecture réfléchi et mettent fin à l'émission d'un signal de défauts dès que l'intensité du faisceau de lecture modulé par le signal drapeau de défauts à durée un intervalle de temps prédéterminée, après quoi les installations de commande deviennent actives pour amener de cette manière le signal de données à nouveau à l'installation de modulation dans le but d'un enregistrement sur la plaque-mémoire.

18. Dispositif selon la revendication 17, caractérisé en ce qu'un faisceau foyer ou de focalisation est produit supplémentairement à l'aide de la grille de diffraction (35), qui est projetée sur la plaque-mémoire (11) en utilisant le chariot de lentilles (17), de telle manière qu'il vienne frapper la plaque-mémoire selon une quantité prédéterminée avant le faisceau d'écriture et entre le faisceau de pré-écriture et le faisceau de lecture, le faisceau foyer présentant une intensité telle qu'une réfléxion ait lieu à la surface de la plaque mémoire sans que les propriétés de réfléxion de la plaque-mémoire soient influencées, et en ce que les installations détectrices de défauts sont conformées de telle manière qu'en fonction du faisceau foyer ou de focalisation réfléchi un signal de défaut soit produit dès que le faisceau de focalisation réfléchi présente une intensité dépassant de la quantité prédéterminée par rapport au faisceau de pré-écriture réfléchi.

19. Dispositif pour l'enregistrement de données de signaux sur une plaque-mémoire réfléchissant la lumière, comprenant une installation pour la modulation de l'intensité d'un faisceau d'écriture en fonction d'un signal de données, un chariot de lentilles pourvu d'une source lumineuse pour la production d'un faisceau d'écriture et la projection du faisceau d'écriture modulé en intensité sur la plaque-mémoire, le faisceau d'écriture comprenant une intensité de pointe influençant les propriétés de réflexion de la plaque-mémoire à l'emplacement d'impact, et une installation d'entraînement permettant la mise en rotation de la plaque-mémoire par rapport au faisceau d'écriture si bien que la plaque-mémoire puisse être sollicitée par le faisceau d'écriture et que le signal de données soit enregistré sur une piste d'enregistrement à l'aide du faisceau d'écriture, caractérisé en ce que,

– le chariot de lentilles comporte une source lumineuse pour la production d'un faisceau de pré-écriture qui est quidé en direction de la plaque-mémoire simultanément avec le faisceau d'écriture modulé en intensité, le faisceau de pré-écriture comprenant une intensité qui n'influence pas les propriétés de réflexion de la plaque-mémoire à l'emplacement d'impact,

– l'installation d'entraînement met en rotation la plaque-mémoire par rapport au faisceau de pré-écriture et le faisceau d'écriture, si bien que les deux faisceaux soient guidés simultanément le long de la surface supérieure de la plaque-mémoire,

– le faisceau de lentilles (17) positionnant le faisceau de pré-écriture et le faisceau d'écriture l'un par rapport à l'autre de telle façon que le faisceau de pré-écriture charge une zone non enregistrée de la plaque-mémoire à une distance prédéterminée avant le faisceau d'écriture,

– les installations détectrices de défauts étant conformées de telle manière qu'en conformité avec la réfléxivité de la plaque-mémoire à l'emplacement d'impact du faisceau de pré-écriture, elles surveillent l'intensité de celui-ci et produisent un signal de défauts dès qu'un emplacement ou un endroit de défauts influençant la réflexivité à été exploré sur la plaque-mémoire, et

– les installations de commande, en fonction de la manifestation d'un signal de défauts, isolent le signal de données de l'installation de modulation, de façon que l'enregistrement des signaux de données sur la plaque-mémoire soit interrompu à cet instant de temps, dès qu'un endroit de défauts ait été détecté à l'aide du faisceau de pré-écriture, avant que cet endroit de défauts soit parvenu dans la zone du faisceau d'écriture.

20. Procédé pour l'enregistrement de signaux de données sur un milieu mémoire mobile, selon lequel un signal de données est enregistré sur un milieu d'enregistrement grâce à l'utilisation d'installations de convertisseur de signaux, un milieu mémoire est exploré, en utilisant les installations détectrices de défauts, avant le processus de l'inscription proprement dit, pour constater la présence d'emplacements de défauts perturbant l'enregistrement du signal de données, le cas échéant avec émission d'un signal de défauts, et selon lequel, en fonction de la manifestation d'un signal de défauts, la retransmission de signaux de données est interrompu et simultanément un signal drapeau de défauts spécifique en accord avec la signal de défauts est enregistré sur le milieu d'enregistrement, caractérisé en ce que, le milieu d'enregistrement est exploré en utilisent les installations de conversion de signal, sans modification de ses propriétés d'enregistrement, pour constater la présence de zones de défauts, et en ce qu'en vue d'un marquage de l'endroit respectif d'une zone de défauts constatée, un signal drapeau de défauts est transmis aux installations de conversion de signaux, à la place du signal de données respectif, qui enregistrent ainsi le signal drapeau de défauts correspondant le long de la piste d'enregistrement.

21. Procédé selon la revendication 20, caractérisé en ce qu'à la fin d'une zone de défauts constatée, le signal de défauts produit est interrompu et qu'à la suite de l'interruption du signal de défauts, le signal de données est transmis à nouveau aux installations de conversion de signal.

22. Procédé selon la revendication 21, caractérisé en ce que, pour la détection de la fin d'une zone de défauts, le milieu d'enregistrement est exploré à un endroit qui suit les installations de conversion de signal selon une quantité prédéterminée.

23. Procédé selon la revendication 20, caractérisé en ce que le milieu de mémoire est exploré à une distance prédéterminée derrière l'installation de conversion de signal, pour constater de cette manière la présence d'un signal drapeau de défauts enregistré sur le milieu mémoire, et en ce que l'émission d'un signal de défauts est interrompue dès que le signal drapeau de défauts ait été constaté pendant un intervalle de temps prédéterminé.

24. Procédé selon la revendication 20, caractérisé en ce que:

– on utilise une plaque-mémoire réfléchissant la lumière comme milieu de mémoire,

– avant l'exploration du milieu mémoire un faisceau d'écriture modulé par le signal de données, d'intensité élevée, est orienté sur ce milieu, ce qui permet lors de la rotation de la plaque-mémoire la production d'une suite de zones non réfléchissantes, décalées les unes des autres, en fonction du signal de données à enregistrer,

– supplémentairement un faisceau de pré-écriture présentant une intensité relativement faible est projeté sur la plaque-mémoire, ce qui provoque la formation d'un faisceau réfléchi présentant une intensité correspondant à la réfléxivité de la plaque-mémoire, et

– une surveillance du faisceau lumineux réfléchi permet la production d'un signau de défaut dès que l'intensité de signal tombe en dessous d'une valeur de seuil prédéterminée.

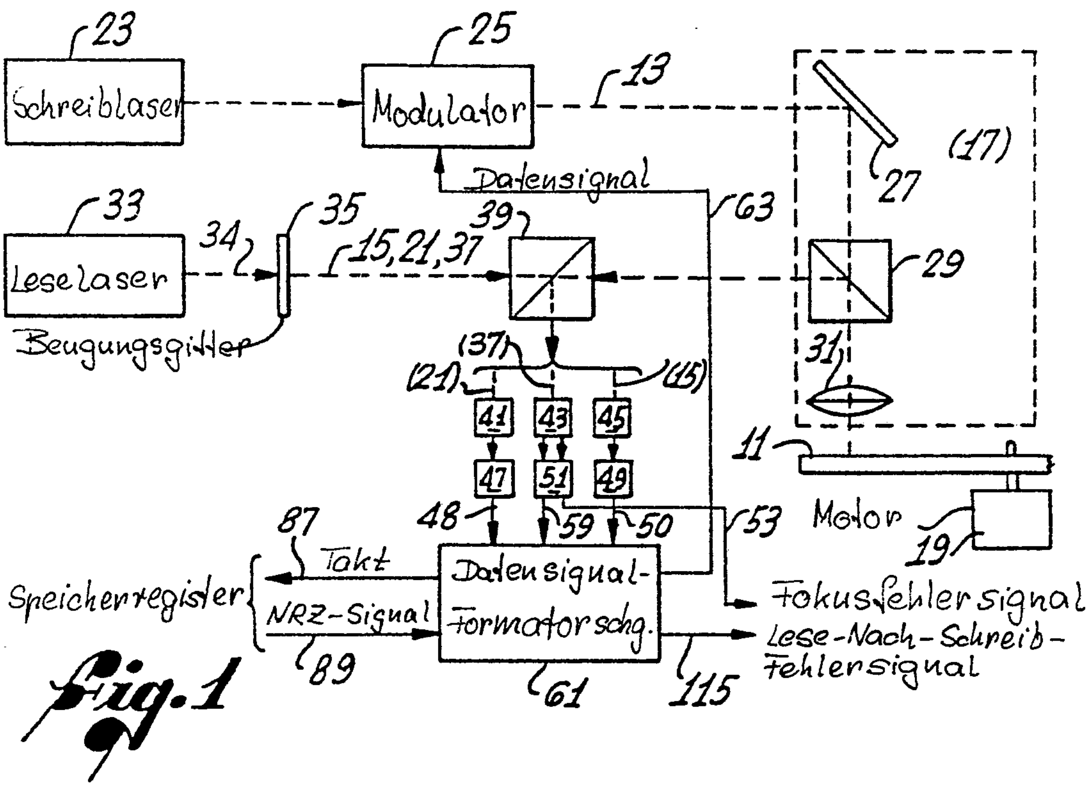
23
Schreiblaser
25
Modulator
13
(17)
27
Datensignal
63
33
Leselaser
34
35
15,21,37
39
29
Beugungsgitter
(37)
(21)
(45)
31
41
43
45
47
51
49
11
87
48
59
50
53
Motor
19
Takt
Speicherregister
Datensignal-Formatorschg.
NRZ-Signal
89
61
115
Fokusfehlersignal
Lese-Nach-Schreib-Fehlersignal

Fig.1

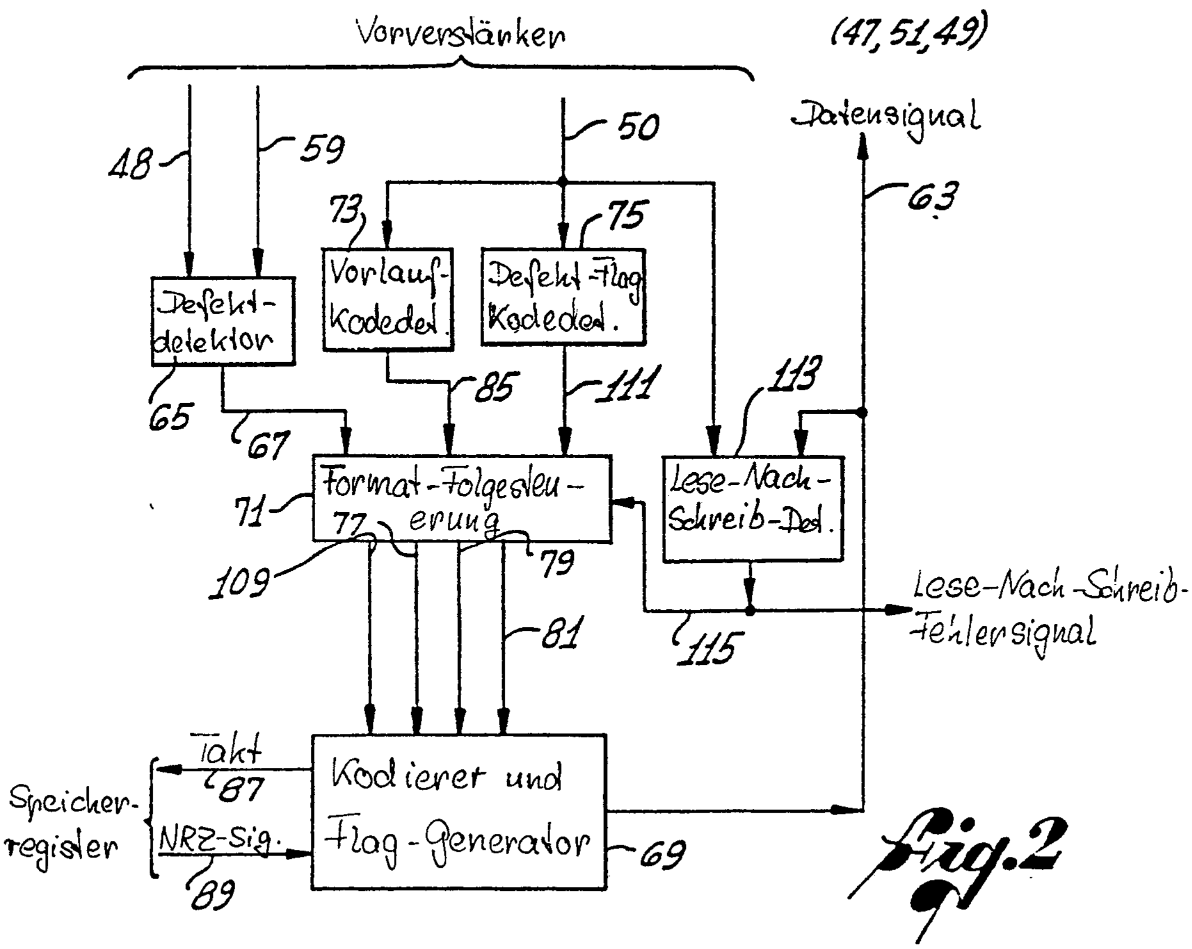
Vorverstärker
(47,51,49)
Datensignal
48
59
50
63
73
75
Defekt-detektor
Vorlauf-Kodedet.
Defekt-Flag Kodedet.
65
85
111
113
67
Format-Folgesteuerung
Lese-Nach-Schreib-Det.
71
77
79
109
81
115
Lese-Nach-Schreib-Fehlersignal
Takt
87
Kodierer und Flag-Generator
Speicher-register
NRZ-Sig.
89
69

Fig.2

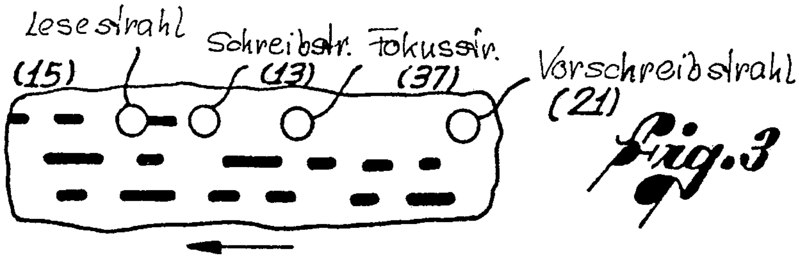


Fig.3

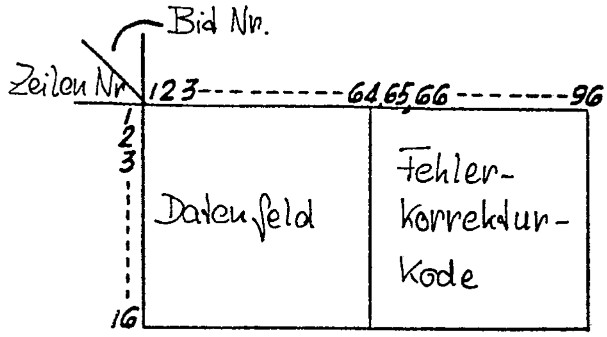


Fig.5

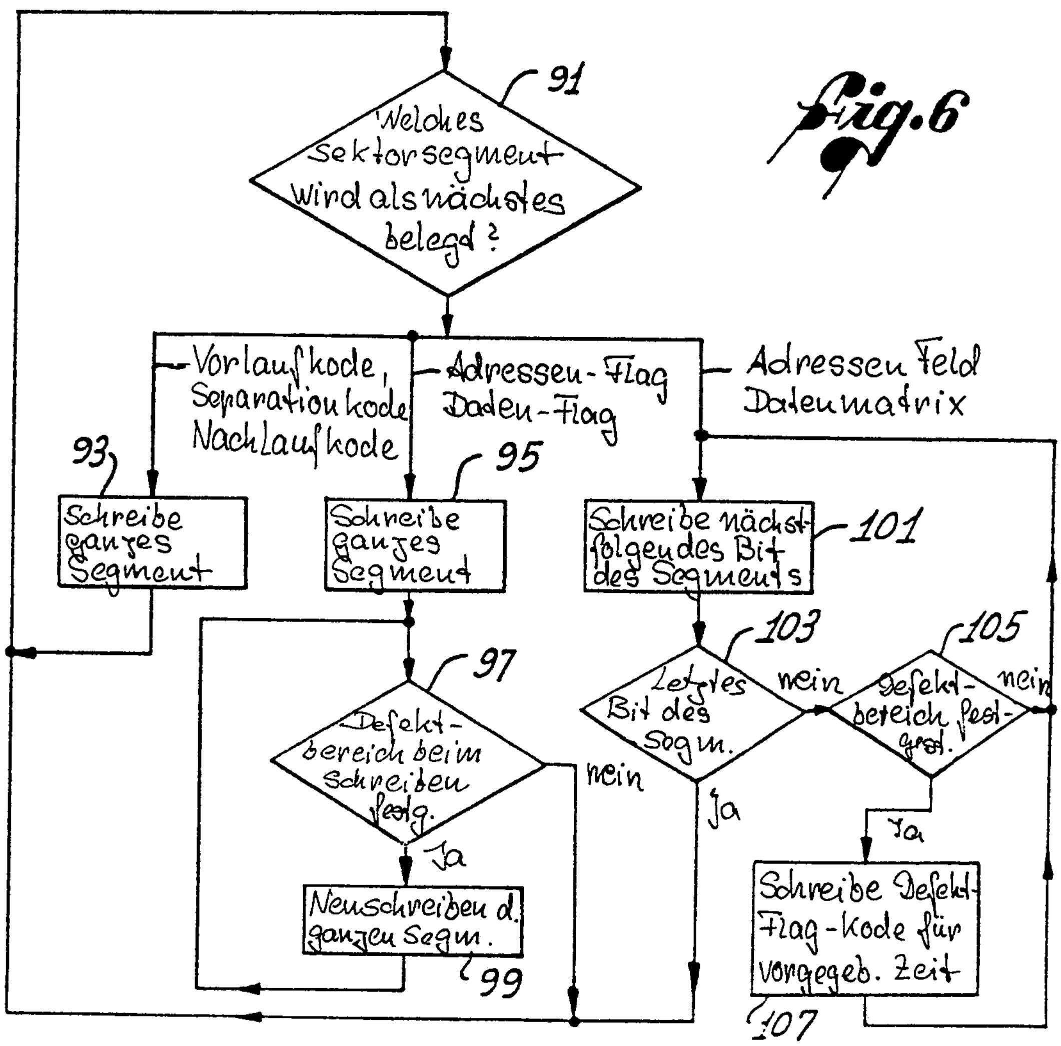


Fig.6

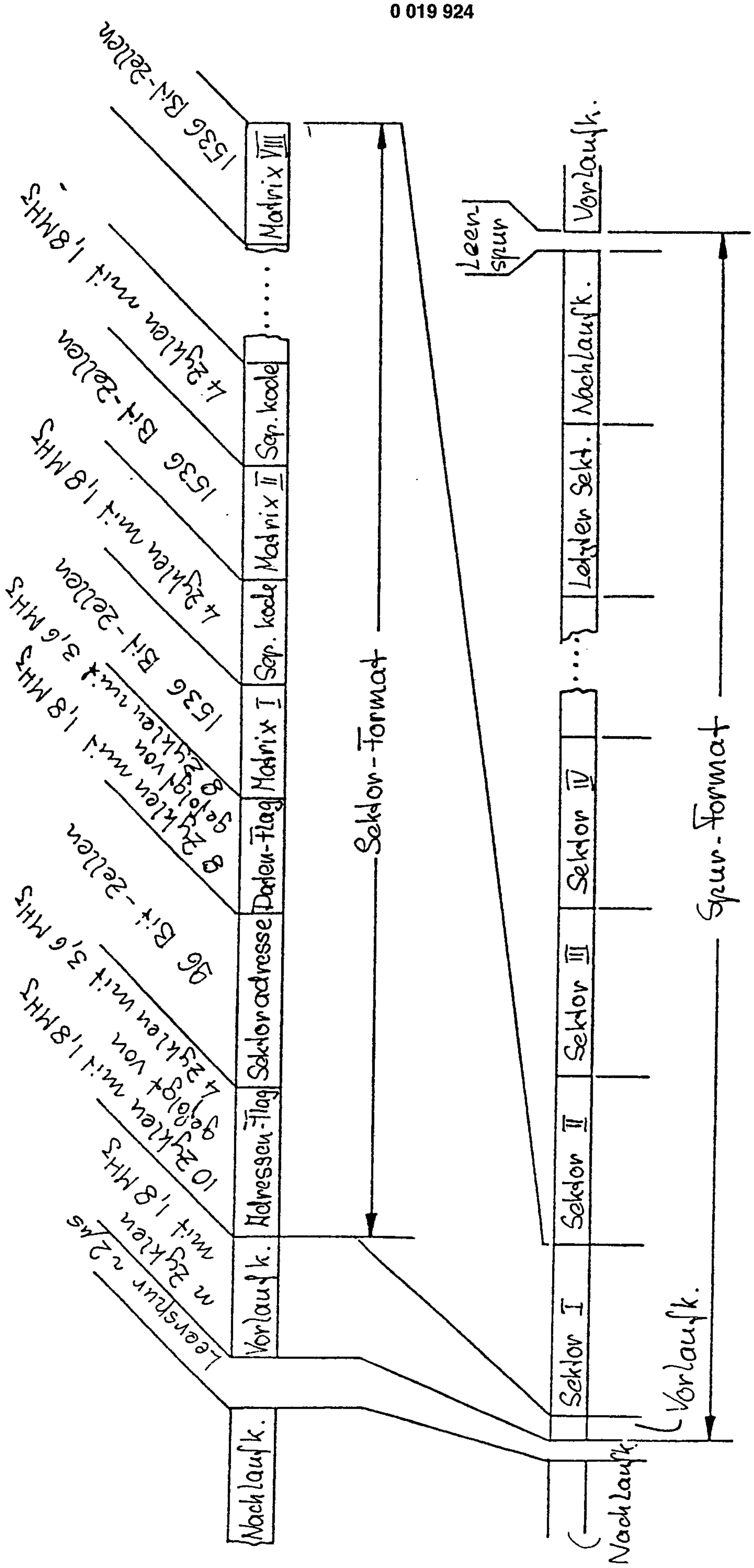
Nachlaufk.
Vorlaufk.
Adressen-Flag
Sektoradresse
Daten-Flag
Matrix I
Sep. kode
Matrix II
Sep. kode
Matrix VIII
1536 Bit-Zellen
4 Zyklen mit 1,8 MHz
1536 Bit-Zellen
4 Zyklen mit 1,8 MHz
1536 Bit-Zellen
8 Zyklen mit 1,8 MHz gefolgt von 8 Zyklen mit 3,6 MHz
96 Bit-Zellen
10 Zyklen mit 1,8 MHz gefolgt von 4 Zyklen mit 3,6 MHz
m Zyklen mit 1,8 MHz
Leerspur ≈2 µs
Sektor-Format
Sektor I
Sektor II
Sektor III
Sektor IV
Letzter Sekt.
Nachlaufk.
Leerspur
Vorlaufk.
Spur-Format
Vorlaufk.
Nachlaufk.

Fig. 4